# EUROPÄISCHE PATENTANMELDUNG

(11) **EP 4 506 594 A1**
(43) Veröffentlichungstag der Anmeldung: **12.02.2025**
(21) Anmeldenummer: 24175243.5
(22) Anmeldetag: 10.05.2024
(51) Int. Cl.: F16H 61/02, B62M 6/45, B62M 6/50, B62M 25/08, F16H 61/08, F16H 61/70, B62M 6/55, B62M 11/06, F16H 3/091, F16H 3/10, F16H 37/04

(54) **DATENVERARBEITUNGSVORRICHTUNG UND COMPUTER-IMPLEMENTIERTES VERFAHREN ZUM SYNCHRONISIERTEN SCHALTEN VON FAHRRAD-SCHALTGETRIEBEN, FAHRRAD-SCHALTGETRIEBE UND VERFAHREN ZU DESSEN BETRIEB**

(30) Priorität: 09.08.2023 DE 102023121284
(71) Anmelder: Nicolai, Karlheinz, 31089 Duingen Lübbrechtsen (DE)
(72) Erfinder: Nicolai, Karlheinz, 31089 Duingen Lübbrechtsen (DE)
(74) Vertreter: Grünecker Patent- und Rechtsanwälte PartG mbB

(57) **Zusammenfassung**

Die Erfindung betrifft eine Datenverarbeitungsvorrichtung (104) und ein computer-implementiertes Verfahren zur Steuerung eines Gangwechsels in einem Fahrrad-Schaltgetriebe (4) für ein Fahrrad (1) mit oder ohne Hilfsmotor (2), insbesondere einer Tretlager- oder Nabenschaltung, von einem Gang direkt in einen anderen Gang durch automatische Betätigung eines ersten und eines zweiten Kupplungsaktuators (42, 64). Die Erfindung betrifft ferner ein Fahrrad-Schaltgetriebe mit einer solchen Datenverarbeitungsvorrichtung sowie ein Verfahren zum Durchführen eines Gangwechsels. Die die Datenverarbeitungsvorrichtung ist ausgestaltet, wenigstens einen Schaltparameter (112) zu empfangen, der repräsentativ ist für einen Zustand des Fahrrad-Schaltgetriebes; und abhängig von dem wenigstens einen Schaltparameter (112) und einem einen Befehl für einen Gangwechsel repräsentierenden Gangwechselsignal (106) ein Betätigungssignal (120) zur Betätigung des ersten und des zweiten Kupplungsaktuators (42, 64) auszugeben. Dabei sind im Betätigungssignal (120) Steuerdaten enthalten, die repräsentativ sind für einen zeitlichen Abstand zwischen der Betätigung des ersten Kupplungsaktuators (42) und der Betätigung des zweiten Kupplungsaktuators (64) und/oder eine einzustellende Schaltgeschwindigkeit des ersten Kupplungsaktuators (42) und eine Schaltgeschwindigkeit des zweiten Kupplungsaktuators (64). Durch diese Ausgestaltung kann ein Leertritt oder das unerwünschte Einlegen eines Zwischenganges beim Gangwechsel vermieden werden.

## Beschreibung

Die Erfindung betrifft eine Datenverarbeitungsvorrichtung und ein computer-implementiertes Verfahren zur Steuerung eines Gangwechsels in einem Fahrrad-Schaltgetriebe für ein Fahrrad mit oder ohne Hilfsmotor von einem eingelegten Gang direkt in einen anderen, einzulegenden Gang durch automatische Betätigung eines ersten Kupplungsaktuators und mindestens eines zweiten Kupplungsaktuators. Bei dem Fahrrad-Schaltgetriebe kann es sich insbesondere um eine Tretlagerschaltung, eine Nabenschaltung oder eine Split-Schaltung mit einer Tretlagerschaltung und einer damit kombinierten Nabenschaltung handeln. Das Fahrrad kann auch mehrspurig sein.

Tretlagerschaltungen und Nabenschaltungen haben sich als eine Alternative zur klassischen Kettenschaltung etabliert, weil bei ihnen das Getriebe von der Außenumgebung abgeschirmt ist und damit weniger stark verschleißt.

Bei einigen Fahrrad-Schaltgetrieben wird ein hoher mechanischer Aufwand betrieben, um die Gangwechsel mechanisch umzusetzen. So werden beispielsweise drehbare Schaltwellen eingesetzt, die über Schaltnocken oder Kulissensteuerung die Kupplungen einzelner Zahnradpaarungen bzw. Schaltstufen ein- und auskuppeln. Der eingelegte Gang ergibt sich aus der Kombination der gerade eingekuppelten Zahnradpaarungen.

Bei einigen Gangwechseln müssen gleichzeitig zwei Kupplungen eingekuppelt werden. Bei einem solchen Gangwechsel besteht die Gefahr, dass bei einem nicht exakt gleichzeitigen Einkuppeln der beiden Kupplungen Zwischengänge eingelegt werden können oder ein Leertritt erfolgt. Ein Zwischengang wird eingelegt, wenn eine der beiden für den Gangwechsel einzukuppelnden Kupplungen vor der anderen Kupplung eingekuppelt ist, so dass für kurze Zeit unbeabsichtigt eine andere Schaltstufe in den Leistungsfluss durch das Fahrrad-Schaltgetriebe geschaltet ist. Dies macht sich dadurch bemerkbar, dass der Radfahrer kurzzeitig mit einer anderen Trittfrequenz treten muss, als er eigentlich beabsichtigt. Dies kann zum Sturz führen, wenn bei einer Bergauffahrt der Zwischengang einen zu hohen Gang darstellt, so dass die Trittfrequenz so stark absinkt, dass der Fahrer keine Kraft mehr auf das Pedal bringt und umkippt. Umgekehrt kann ein zu kleiner Zwischengang dazu führen, dass der Radfahrer kurzfristig zu schnell treten muss und vom Pedal rutscht.

Der vorliegenden Erfindung liegt folglich die Aufgabe zugrunde, einen Gangwechsel bei einem Fahrrad-Schaltgetriebe, der das gleichzeitige Schalten zweier Kupplungen erfordert, so zu verbessern, dass kein Zwischengang und kein Leertritt auftritt.

Diese Aufgabe wird erfindungsgemäß für die eingangs genannte Datenverarbeitungsvorrichtung dadurch gelöst, dass die Datenverarbeitungsvorrichtung ausgestaltet ist, wenigstens einen Schaltparameter zu empfangen, der repräsentativ ist für einen Zustand des Fahrrad-Schaltgetriebes; abhängig von dem wenigstens einem Schaltparameter und einem einen Befehl für einen Gangwechsel repräsentierenden Gangwechselsignal ein Betätigungssignal zur Betätigung des ersten und des mindestens zweiten Kupplungsaktuators auszugeben; wobei im Betätigungssignal Steuerdaten enthalten sind, die repräsentativ sind für in der Zukunft liegenden Zeitpunkte, zu denen der erste Kupplungsaktuator und/oder der zweite Kupplungsaktuator eine für den Gangwechsel erforderliche Schaltbewegung ausgeführt haben oder ausführen soll, und/oder für einen zeitlichen Abstand zwischen der Betätigung des ersten Kupplungsaktuators und der Betätigung des zweiten Kupplungsaktuators und/oder für eine einzustellende Schaltgeschwindigkeit des ersten Kupplungsaktuators und eine einzustellende Schaltgeschwindigkeit des zweiten Kupplungsaktuators.

Gelöst wird diese Aufgabe femer durch eine Steuervorrichtung mit einer solchen Datenverarbeitungsvorrichtung, die des Weiteren ein für einen Radfahrer zugängliches Betätigungselement aufweist, das ausgestaltet ist, bei Betätigung durch den Radfahrer das Gangwechselsignal zu erzeugen.

Die Aufgabe wird des Weiteren gelöst durch eine computer-implementiertes Verfahren der eingangs genannten Art, das die folgenden Schritte umfasst: Empfangen wenigstens eines Schaltparameters, der repräsentativ ist für einen momentanen Zustand des Fahrrad-Schaltgetriebes; Ausgeben eines Betätigungssignals zur Betätigung des ersten Kupplungsaktuators und des mindestens zweiten Kupplungsaktuators abhängig von dem wenigstens einen Schaltparameter und einem einen Befehl für einen Gangwechsel repräsentierenden Gangwechselsignal; wobei im Betätigungssignal Steuerdaten enthalten sind, die repräsentativ sind für in der Zukunft liegenden Zeitpunkte, zu denen der erste Kupplungsaktuator und/oder der zweite Kupplungsaktuator eine für den Gangwechsel erforderliche Schaltbewegung ausgeführt haben oder ausführen soll, und/oder für einen zeitlichen Abstand zwischen der Betätigung des ersten Kupplungsaktuators und der Betätigung des zweiten Kupplungsaktuators und/oder für eine Schaltgeschwindigkeit des ersten Kupplungsaktuators und eine Schaltgeschwindigkeit des zweiten Kupplungsaktuators.

Die Erfindung betrifft darüber hinaus ein Computerprogrammprodukt oder einen computerlesbaren Datenträger, der Befehle umfasst, die bei der Ausführung durch einen Computer oder eine Datenverarbeitungsvorrichtung diesen oder diese veranlasst, das computer-implementierte Verfahren auszuführen.

Ferner umfasst die Erfindung ein Fahrrad-Schaltgetriebe der eingangs bezeichneten Art, das aufweist: Eine erste Kupplung, die zwischen einem eingekuppelten und einem ausgekuppelten Betätigungszustand umschaltbar ausgestaltet ist; eine zweite Kupplung, die zwischen einem eingekuppelten und einem ausgekuppelten Betätigungszustand umschaltbar ausgestaltet ist; einen ersten Kupplungsaktuator zur Änderung des Betätigungszustands der ersten Kupplung; einen zweiten Kupplungsaktuator zur Änderung des Betätigungszustandes der zweiten Kupplung; ein erstes Zahnradpaar mit einem ersten Zahnrad, wobei die Festlegung des ersten Zahnrads gegenüber einem Element des Fahrrad-Schaltgetriebes abhängig vom Betätigungszustand der ersten Kupplung ist; ein zweites Zahnradpaar mit einem zweiten Zahnrad, wobei die Festlegung des zweiten Zahnrades gegenüber einem Element des Fahrrad-Schaltgetriebes abhängig vom Betätigungszustand der zweiten Kupplung ist; einen Gang und einen weiteren Gang aufweist, wobei in dem einen Gang die erste Kupplung und die zweite Kupplung jeweils einen anderen Betätigungszustand aufweisen als in dem anderen Gang; und eine Datenverarbeitungsvorrichtung wie vorstehend oder eine Steuereinrichtung wie vorstehend.

Schließlich betrifft die Erfindung noch ein Verfahren zum Durchführen eines Gangwechsels in einem Fahrrad-Schaltgetriebe für ein Fahrrad mit oder ohne Hilfsmotor, von einem Gang direkt in einem anderen Gang durch automatisches Betätigen eines ersten Kupplungsaktuators und eines zweiten Kupplungsaktuators, wobei bei einem Gangwechsel abhängig vom momentanen Zustand des Fahrrad-Schaltgetriebes automatisch der erste Kupplungsaktuator und der zweite Kupplungsaktuator zu unterschiedlichen Zeitpunkten und/oder mit unterschiedlichen Schaltgeschwindigkeiten betätigt werden.

Durch die oben genannte Lösung, den Zeitpunkt des Beginns und/oder des Endes einer Schaltbewegung der beiden für den Gangwechsel zu betätigenden Kupplungsaktuatoren, den Zeitabstand zwischen der Betätigung der beiden für den Gangwechsel zu betätigenden Kupplungsaktuatoren und/oder deren Schaltgeschwindigkeit vom momentanen Zustand des Fahrrad-Schaltgetriebes abhängig zu machen, lassen sich Leertritte und Zwischengänge bei einem Gangwechsel, der die gleichzeitige Betätigung zweier Kupplungen erfordert, zuverlässig vermeiden. Der Gangwechsel kann besser gesteuert oder gar geregelt werden.

Die Erfindung kann durch die folgenden voneinander unabhängigen, jeweils für sich vorteilhaften und beliebig miteinander kombinierbaren Weiterbildungen weiter verbessert werden. Dabei können weiterbildenden Verfahrensmerkmale auch zur Verbesserung der Vorrichtung dienen, indem die Vorrichtung ausgestaltet ist, den weiterbildenden Verfahrensschritt auszuführen. Analog kann ein weiterbildendes Vorrichtungsmerkmal zur Verbesserung des Verfahrens verwendet werden, indem der Schritt, zu dessen Durchführung die Vorrichtung ausgestaltet ist, durchgeführt wird.

Ein Betätigen einer Kupplung ist in diesem Text gleichbedeutend mit einem Einkuppeln, also dem Bereitstellen einer leistungs- bzw. drehmomentübertragenden Verbindung in wenigstens einer Drehrichtung. Bei den Kupplungen kann es sich dabei insbesondere um schaltbare Freiläufe handeln, die im betätigten bzw., gleichbedeutend, im eingekuppelten Zustand ein Drehmoment nur in einer Drehrichtung übertragen. Ein schaltbarer Freilauf ist gegenüber der Kombination einer reinen Kupplung und eines Freilaufs platzsparender und vermeidet Zustände, in denen das Getriebe kurzzeitig statisch überbestimmt ist und klemmen kann. Zum Betätigen einer Kupplung führt der dieser Kupplung zugeordnete Kupplungsaktuator eine Schaltbewegung durch. Die Schaltbewegung kann translatorisch und/oder rotatorisch sein.

Ein "direktes Schalten" von dem einen in den anderen Gang soll zum Ausdruck bringen, dass das Einlegen eines weiteren Ganges zwischen dem einem und dem anderen Gang vom Radfahrer nicht beabsichtigt ist. Der Gangwechsel von dem einen in den anderen Gang soll demnach unmittelbar erfolgen.

Ein solcher direkter Gangwechsel kann je nach Ausgestaltung des Fahrrad-Schaltgetriebes nicht nur die Betätigung eines ersten und eines zweiten Kupplungsaktuators, sondern auch die Betätigung eines dritten Kupplungsaktuators sowie gegebenenfalls weiterer Kupplungsaktuatoren erfordern. Die soll mit dem Ausdruck "mindestens zweiter Kupplungsaktuator" zum Ausdruck gebracht werden. Für die Betätigung des dritten Kupplungsaktuators gilt dasselbe wir für die Betätigung des zweiten Kupplungsaktuators.

Unter dem Ausdruck "Empfangen" wird sowohl ein Empfangen als auch ein aktives Abrufen eines Wertes verstanden. Entsprechend wird unter dem Ausdruck "eines Wertes" verstanden, dass dieser Werte gesendet oder zum Abruf bereitgestellt wird.

Der Gangwechsel kann neben der Betätigung des ersten Kupplungsaktuators und des zweiten Kupplungsaktuators auch das Deaktivieren eines dritten und vierten Kupplungsaktuators erfordern. Der dritte und der vierte Kupplungsaktuator entsprechen denjenigen Kupplungsaktuatoren, die für den Gang betätigt sein mussten, von dem aus der Gangwechsel erfolgte. Die Deaktivierung des dritten und vierten Kupplungsaktuators bzw. der dritten und vierten Kupplung erfolgt bevorzugt erst dann, wenn die erste und zweite Kupplung betätigt sind. Die Betätigung der ersten und zweiten Kupplung kann über einen Schaltparameter bestimmt werden. Alternativ können die dritte und vierte Kupplung nach Ablauf einer vorbestimmten Zeitspanne nach Ausgabe des Betätigungssignals deaktiviert werden.

Bei dem Betätigungssignal kann es sich um ein digitales Signal oder ein analoges Signal oder eine Kombination eines digitalen oder eines analogen Signales handeln. Entsprechend können die im Betätigungssignal enthaltenen Steuerdaten digital oder analog sein. Das Betätigungssignal kann in einer weiteren Ausgestaltung auch eine elektrische Leistung übertragen.

In einer Variante kann das Betätigungssignal zwei Teile aufweisen, wobei ein erster Teil an den ersten Kupplungsaktuator und ein zweiter Teil an den zweiten Kupplungsaktuator beispielsweise über getrennte Leitungen oder mit einem Adressblock versehen über eine einzige Leitung versandt wird. Im einfachsten Fall bestimmt der Zeitabstand zwischen dem ersten und dem zweiten Teil des Betätigungssignals den Zeitabstand zwischen der Betätigung des ersten und des zweiten Kupplungsaktuators. Eine Stromspannung, Stromstärke, Amplitude und/oder Frequenz des ersten Teils kann die Schaltgeschwindigkeit des ersten Kupplungsaktuators und eine Frequenz und/oder Amplitude des zweiten Teils kann eine Schaltgeschwindigkeit des zweiten Kupplungsaktuators repräsentieren.

In einer anderen Variante kann das Betätigungssignal als digitales Signal über ein drahtgebundenes oder ein drahtloses Bussystem, beispielsweise Bluetooth Low Energy, Bluetooth oder ANT+ ausgegeben werden. Die Datenverarbeitungsvorrichtung weist bevorzugt eine Datenschnittstelle auf, die den Austausch von Daten mit wenigstens einem Sensorsystem und/oder den Kupplungsaktuatoren über ein solches drahtgebundenes oder drahtloses Bussystem ermöglicht.

Wenigstens ein Kupplungsaktuator kann mit einem eingebetteten System versehen sein, das ausgestaltet ist, die Schaltbewegung des Kupplungsaktuators zu steuern. Das eingebettete System eines Kupplungsaktuators kann mit der Datenverarbeitungsvorrichtung datenübertragend verbunden sein. Alternativ kann ein eingebettetes System eines Kupplungsaktuators auch Teil der Datenverarbeitungsvorrichtung oder der Steuervorrichtung sein. Ein eingebettetes System kann baulich mit dem von ihm gesteuerten Kupplungsaktuator vereint sein, indem es beispielsweise in einem gemeinsamen Gehäuse mit anderen Teil des Kupplungsaktuators angeordnet ist.

Alternativ kann das eingebettete System auch beabstandet von dem von ihm gesteuerten Kupplungsaktuators angeordnet sein.

Die Datenverarbeitungsvorrichtung kann in einer Ausgestaltung einen oder mehrere zentrale, vorzugsweise in einem Gehäuse, baulich vereinte Mikroprozessoren aufweisen und beispielsweise beabstandet von den Kupplungsaktuatoren und deren eingebetteten Systemen, falls vorhanden, angeordnet sein. Die Datenverarbeitungsvorrichtung und die eingebetteten Systeme können in einer anderen Ausgestaltung baulich vereint sein und beispielsweise in oder an dem Fahrrad-Schaltgetriebe angeordnet sein.

In einer weiteren Ausgestaltung kann die Datenverarbeitungsvorrichtung von einem verteilten System gebildet sein. So können die eingebetteten Systeme mehrerer Kupplungsaktuatoren zusammen die Datenverarbeitungsvorrichtung bilden. Schließlich kann die Datenverarbeitungsvorrichtung auch nur von einem eingebetteten System gebildet sein.

Die Datenverarbeitungsvorrichtung kann nur von Software, nur von Hardware oder von einer Kombination von Soft- und Hardware gebildet sein.

Über die Datenschnittstelle können beispielsweise ein oder mehrere Sensorsysteme analog oder digital datenübertragend mit der Datenverarbeitungsvorrichtung verbunden bzw. der wenigstens eine Schaltparameter empfangen werden.

Über die Datenschnittstelle kann beispielsweise auch das Betätigungssignal ausgegeben werden.

Der erste Kupplungsaktuator und/oder der mindestens zweite Kupplungsaktuator kann einen elektrischen, elektromagnetischen oder magnetischen Antrieb aufweisen. Die von dem Antrieb erzeugte Antriebsbewegung kann rotatorisch und/oder translatorisch sein. Bei dem Antrieb kann es sich beispielsweise um einen Elektromotor, insbesondere einen Schrittmotor, einen Piezoaktor, einen Formgedächtniswerkstoff, ein Bimetall oder einen Magneten handeln.

In einer Ausgestaltung kann ein Kupplungsaktuator nur jeweils eine einzige Kupplung betätigen. In einer anderen Ausgestaltung kann ein Kupplungsaktuator jeweils eine Mehrzahl von Kupplungen betätigen. Der Kupplungsaktuator kann beispielsweise eine Schaltwelle mit Schaltnocken und/oder Schaltkulissen antreiben, durch die jeweils mechanisch eine Kupplung betätigt wird.

Gemäß einem weiteren Aspekt wird der Gangwechsel mittels eines Regelkreises anhand des wenigstens einen Schaltparameters als Regelgröße geregelt. Dadurch können plötzliche Änderungen des Zustands des Schaltgetriebes, beispielsweise plötzliche Wechsel der Trittfrequenz oder des Antriebsmoments, noch während des Gangwechsels berücksichtigt werden. Dies senkt das Risiko von Leertritten und unbeabsichtigten Zwischengängen weiter. So kann beispielsweise die Datenverarbeitungsvorrichtung ausgestaltet sein, wenigstens einen aktuellen Schaltparameter während der Ausgabe des Betätigungssignals zu empfangen und das Betätigungssignal während der Ausgabe in Abhängigkeit von dem wenigstens einen empfangenen Schaltparameter zu ändern.

Die Führungsgröße eines solchen Regelkreises kann fest vorgegeben sein und/oder anhand einer vorbestimmten Übertragungsfunktion bestimmt sein, die die Führungsgröße abhängig von dem wenigstens einen Schaltparameter bestimmt. Beispielsweise kann die Führungsgröße temperaturabhängig sein. Führungsgrößen können die Lage des Kupplungsaktuators, dessen Geschwindigkeit und/oder dessen Kraft sein. Weist ein Kupplungsaktuator ein oder mehrere zwischengeschaltete mechanische Elemente auf, die die Kupplung betätigen, wie beispielsweise eine Schaltwelle, Hebel oder Ausrückringe oder Kulissenführungen kann auch deren Position oder Geschwindigkeit eine Führungsgröße sein.

Die Datenverarbeitungsvorrichtung kann in einer Variante ausgestaltet sein, ein einziges Betätigungssignal während der gesamten Zeit, die der Gangwechsel benötigt, auszugeben. Das Betätigungssignal kann einmalig den Gangwechsel in der durch die Steuerdaten bestimmten Form initiieren. Der Gangwechsel läuft dann ohne weiteren Schaltbefehl ab.

In einer anderen Variante wird das Betätigungssignal so lange ausgegeben, bis der Gangwechsel durchgeführt ist, beispielsweise über eine bestimmte Zeitspanne oder bis ein, beispielsweise von wenigstens einem Schaltparameter abhängiges Ereignis eintritt. Ein solches Ereignis kann sein, dass wenigstens ein Schaltparameter einen vorbestimmten Wert einnimmt.

In einer weiteren Ausgestaltung kann das Betätigungssignal während der Ausgabe geändert werden. Ein solcher Fall tritt beispielsweise ein, wenn das Betätigungssignal analog ist und eine Eigenschaft des Betätigungssignals, beispielsweise die Spannung, Stromstärke und/oder Frequenz repräsentativ für die Schaltgeschwindigkeit ist. Ist es aufgrund einer Zustandsänderung des Fahrrad-Schaltgetriebes notwendig, die Schaltgeschwindigkeit einer oder beider Kupplungsaktuatoren zu verändern, so wird die entsprechende Eigenschaft des Betätigungssignals bzw. werden die Steuerdaten während der Ausgabe geändert.

Insbesondere wenn das Betätigungssignal in digitaler Form ausgegeben wird, kann in Abhängigkeit von wenigstens einem aktuellen Schaltparameter ein neues Betätigungssignal ausgegeben werden, das aktualisierte Steuerdaten, insbesondere wenigstens eine aktualisierte Schaltgeschwindigkeit enthält.

Gemäß einer weiteren Ausgestaltung kann die Datenverarbeitungsvorrichtung eine Routine zur Kraft-, Lage- und/oder Geschwindigkeitsregelung wenigstens eines Kupplungsaktuators abhängig von dem wenigstens einen Schaltparameter aufweisen. Die Kraft-, Lage- und/oder Geschwindigkeitsregelung eines Kupplungsaktuators erhöht die Genauigkeit der Kupplungsbetätigung und damit eines Gangwechsels erheblich. Bei einer Lageregelung wird der Kupplungsaktuator zu einer vorbestimmten Position bewegt. Die Position kann im Betätigungssignal, beispielsweise den Steuerdaten, enthalten sein. Bei einer Lageregelung kann die Schaltbewegung des Kupplungsaktuators durch eine zeitliche Abfolge von Schaltpositionen vorgegeben werden. Durch eine Lageregelung kann die Schaltbewegung des ersten Kupplungsaktuators in Relation zu dem zweiten oder weiteren Kupplungsaktuatoren präzise synchronisiert werden.

Bei einer Geschwindigkeitsregelung wird der Kupplungsaktuator so gesteuert, dass er eine vorbestimmte Schaltgeschwindigkeit einhält. Während eines Gangwechsels können zeitlich aufeinanderfolgend unterschiedliche Schaltgeschwindigkeiten vorgegeben werden, wie dies oben bereits beschrieben ist.

Bei einer Kraftregelung wird der wenigstens eine Kupplungsaktuator so betrieben, dass er mit einer vorbestimmten Kraft und damit äquivalent mit einer vorbestimmten Beschleunigung betrieben wird. Eine solche Kraftregelung kann mittels der Überwachung von Stromgrößen erfolgen.

Alternativ oder kumulativ zu einer Routine zur Kraft-, Lage- und/oder Geschwindigkeitsregelung kann die Datenverarbeitungsvorrichtung eine Übertragungsfunktion, wie sie oben bereits angedeutet ist, aufweisen. Durch die Übertragungsfunktion ist ein Betätigungssignal bzw. die Steuerdaten dem wenigstens einen Schaltparameter insbesondere eindeutig zugeordnet ist. Die Übertragungsfunktion kann eine Look-up-Tabelle, eine analytische Funktion oder eine Kombination umfassend eine Look-up-Tabelle und eine analytische Funktion sein. Die Übertragungsfunktion kann experimentell bestimmt sein. So kann für verschiedene Zustände des Fahrrad-Schaltgetriebes jeweils ein Schaltparameter experimentell bestimmt werden, der zu einem schnellen leertrittfreien und zwischengangfreien Gangwechsel führt.

Die Datenverarbeitungsvorrichtung weist bevorzugt einen Speicher auf, in dem die Routine zur Kraft-, Lage- und/oder Geschwindigkeitsregelung und/oder die Übertragungsfunktion gespeichert ist.

Der wenigstens eine Schaltparameter kann in der folgenden Gruppe von Schaltparametern enthalten sein, wobei jede beliebige Kombination von Schaltparametem möglich ist.

So kann der Schaltparameter ein Schaltparameter sein, der repräsentativ ist für ein an wenigstens einer Getriebewelle des Fahrrad-Schaltgetriebes anliegendes Drehmoment. Bei der Getriebewelle kann es sich um eine Antriebs- bzw. Eingangswelle, eine Steuerwelle und/oder eine Abtriebswelle handeln. Auch die Tretlagerwelle ist im Rahmen dieses Textes als eine Getriebewelle anzusehen. Für jede Getriebewelle kann ein separater, für das dort anliegende Drehmoment repräsentativer Schaltparameter vorhanden sein.

Der wenigstens eine Schaltparameter kann repräsentativ für eine Drehzahl wenigstens einer Getriebewelle des Fahrrad-Schaltgetriebes sein. Dies kann dieselbe Getriebewelle sein, bei der auch der für das dort anliegende Drehmoment repräsentative Schaltparameter vorliegt, oder eine andere Getriebewelle. Auch hier kann für jede Getriebewelle ein separater, für deren Drehzahl repräsentativer Schaltparameter vorliegen.

Das Gleiche gilt für einen Schaltparameter, der repräsentativ ist für eine aktuelle Winkelstellung wenigstens einer Getriebewelle des Fahrrad-Schaltgetriebes. An jeder einzelnen Getriebewelle kann ein für deren Winkelstellung repräsentativer Schaltparameter ermittelt werden.

Bevorzugt ist es, wenn das Drehmoment, die Drehzahl und/oder die Winkelstellung aller Getriebewellen in jeweils einem separaten Schaltparameter berücksichtigt ist. Zu beachten ist, dass es ausreicht, nur einen oder zwei dieser Schaltparameter für jede Getriebewelle zur Verfügung zu stellen. Beispielsweise kann die Datenverarbeitungsvorrichtung ausgestaltet sein, aus einem eine Winkelposition einer Getriebewelle repräsentierenden Schaltparameter die Drehzahl durch einfache zeitliche Ableitung zu ermitteln. Aus einem eine Drehzahl einer Getriebewelle repräsentierenden Schaltparameter kann die Winkelposition durch zeitliche Integration ermittelt werden.

Ebenso kann in bestimmten Ausführungen die Winkelposition von unterschiedlichen Getriebewellen anhand von der Winkelposition einer einzelnen Getriebewelle berechnet werden, weil die Übersetzungen zwischen den Getriebewelle in den jeweiligen Gangstufen konstant sind.

Die Datenverarbeitungsvorrichtung kann ausgestaltet sein, den momentan eingelegten Gang abhängig vom Verhältnis der Drehzahl einer Eingangswelle bzw. Antriebswelle des Fahrrad-Schaltgetriebes mit der Drehzahl einer Ausgangswelle bzw. Abtriebswelle des Fahrrad-Schaltgetriebes zu berechnen.

Die Datenverarbeitungsvorrichtung kann ferner ausgestaltet sein, aus dem an einer Getriebewelle anliegenden Drehmoment und dem die Drehzahl repräsentierenden Schaltparameter eine an dieser Getriebewelle anliegende Leistung zu berechnen.

Ein Schaltparameter kann repräsentativ sein für eine momentane Stellung des ersten Kupplungsaktuators. Anhand dieses Schaltparameter kann bestimmt werden, wie weit die vom ersten Kupplungsaktuator betätigte Kupplung eingekuppelt ist bzw. welcher Schaltweg noch bis zum vollständigen Einkuppeln zurückzulegen ist. Entsprechend kann ein Schaltparameter repräsentativ sein für eine momentane Stellung des zweiten Kupplungsaktuators.

Die Datenverarbeitungsvorrichtung kann ausgestaltet sein, den derzeit eingelegten Gang anhand des für die Stellung des ersten Kupplungsaktuators repräsentativen Schaltparameter und des für die Stellung des zweiten Kupplungsaktuators repräsentativen Schaltparameters zu bestimmen.

Anhand des für die momentane Stellung eines Kupplungsaktuators repräsentativen Schaltparameters kann die Datenverarbeitungsvorrichtung den Status des Gangwechsels ermitteln. Beispielsweise kann die Datenverarbeitungsvorrichtung ausgestaltet sein, den für die momentane Stellung eines Kupplungsaktuators repräsentativen Schaltparameter mit einem vorgegebenen, für eine Anfangsstellung repräsentativen Wert zu vergleichen, um das Ende des Gangwechsels festzustellen. Alternativ oder kumulativ kann die Datenverarbeitungsvorrichtung ausgestaltet sein, den für die momentane Stellung eines Kupplungsaktuators repräsentativen Schaltparameter mit einem für die Endstellung des Kupplungsaktuators repräsentativen Wert zu vergleichen, um den Abschluss des Gangwechselvorgangs festzustellen.

Betätigt ein Kupplungsaktuator mehrere Kupplungen, so kann jeder Kupplung eine Anfangs- und/oder Endstellung innerhalb des translatorischen und/oder rotatorischen Gesamthubes des Kupplungsaktuators zugeordnet sein. Dies ist beispielsweise dann der Fall, wenn mehrere Kupplungen von einer Schaltwelle angetrieben werden. So kann beispielsweise der Kupplungsaktuator eine Rotationsbewegung der Schaltwelle antreiben und jede Kupplung nur in bestimmten Winkelbereichen der Schaltwelle betätigt sein. Über den die Winkelstellung des Kupplungsaktuators repräsentierenden Schaltparameter lässt sich die betätigte Kupplung ermitteln.

Ein Schaltparameter kann repräsentativ für eine vom ersten Kupplungsaktuator erzeugte Schaltkraft sein. Ein weiterer Schaltparameter kann repräsentativ eine vom zweiten Kupplungsaktuator erzeugte Schaltkraft sein. Ein solcher Schaltparameter kann direkt durch Messung der Schaltkraft ermittelt werden. Allerdings kann auch eine einem Kupplungsaktuator zugeführte elektrische Leistung repräsentativ für die Schaltkraft sein. Die elektrische Leistung lässt sich beispielsweise mittels der Stromstärke, der Stromspannung und/oder der Stromfrequenz bestimmen, die einem Kupplungsaktuator als Antriebsstrom zur Verfügung gestellt wird. Ferner kann die Beschleunigung der Bewegung eines Kupplungsaktuators repräsentativ für die Schaltkraft sein. Mittels eines die Schaltkraft repräsentierenden Schaltparameters lässt sich eine Kraftregelung eines Kupplungsaktuators realisieren. Mittels der momentanen Stellung eines Kupplungsaktuators lässt sich die bereits erwähnte Lageregelung des Kupplungsaktuators implementieren.

Ein Schaltparameter kann repräsentativ sein für eine momentane Bewegungsgeschwindigkeit des ersten Kupplungsaktuators. Ein Schaltparameter kann repräsentativ für die momentane Bewegungsgeschwindigkeit des zweiten Kupplungsaktuators. Mit Hilfe eines solchen Schaltparameters lässt sich beispielsweise die bereits erwähnte Geschwindigkeitsregelung eines Kupplungsaktuators wie oben beschrieben implementieren.

Ein Schaltparameter kann repräsentativ sein für den eingelegten Gang. Die Datenverarbeitungsvorrichtung kann ausgestaltet sein, den eingelegten Gang anhand der Drehzahl der Antriebswelle und der Abtriebswelle zu berechnen. Alternativ oder kumulativ kann die Datenverarbeitungsvorrichtung ausgestaltet sein, den eingelegten Gang anhand der Schaltparameter, die repräsentativ sind für die Position des ersten Kupplungsaktuators und des zweiten Kupplungsaktuators zu berechnen.

Ein Schaltparameter kann repräsentativ sein für eine Temperatur des Fahrrad-Schaltgetriebes. Die Temperatur des Fahrrad-Schaltgetriebes kann die Antwortzeiten der Kupplungsaktuatoren beeinflussen, so dass deren Berücksichtigung bei der Betätigung der Kupplungsaktuatoren die Synchronisierung der Kupplungen verbessert.

Die beiden bei dem Gangwechsel zu betätigenden Kupplungen können jeweils eine Antriebsseite und eine Abtriebsseite aufweisen, die bei der Betätigung einzukuppeln sind. Eine von Antriebsseite und Abtriebsseite kann wenigstens eine Freilaufklinke, -klaue oder wenigstens einen Freilaufzahn aufweisen, die im Folgenden unter dem Begriff Freilaufklinke zusammengefasst sind. Die Datenverarbeitungsvorrichtung kann ausgestaltet sein, die momentane relative Position von Antriebsseite und Abtriebsseite der beiden zu schaltenden Kupplungen mittels Schaltparameter zu bestimmen. Anhand dieser momentanen relativen Position kann die Datenverarbeitungsvorrichtung den Schaltweg bis zum Eingriff von Antriebs- und Abtriebsseite und anhand der relativen Drehzahlen der Antriebs- und der Abtriebsseite die für den Schaltweg verbleibende Zeit berechnen. Auf diese Weise wird unter anderem der Leertritt minimiert.

Das Gangwechselsignal kann einen oder mehrere Gangwechselparameter aufweisen. Ein Gangwechselparameter kann beispielsweise repräsentativ sein für die Schaltrichtung. Ein Gangwechselparameter kann repräsentativ sein für die Anzahl von Gängen, die bei dem angeforderten Gangwechsel zu überspringenden Gänge sein. Ein Gangwechselparameter kann repräsentativ sein für den gerade eingelegten Gang bzw. dessen Gangzahl. Ein Gangwechselparameter kann repräsentativ sein für den einzulegenden Gang bzw. dessen Gangzahl. Die Datenverarbeitungsvorrichtung kann ausgestaltet sein, die Schaltrichtung aus dem den gerade eingelegten Gang repräsentierenden Gangwechselparameter und dem den einzulegenden Gang repräsentierenden Gangwechselparameter zu bestimmen.

Das Gangwechselsignal kann vom Radfahrer selbst erzeugt sein, wie dies beispielsweise bei einem manuellen Schaltvorgang der Fall ist. Beispielsweise kann die Datenverarbeitungsvorrichtung einen manuellen Modus aufweisen, der einen manuellen Schaltvorgang durch den Radfahrer ermöglicht. Alternativ oder kumulativ kann die Datenverarbeitungsvorrichtung ausgestaltet sein, einen Gangwechsel automatisch durchzuführen. Hierzu kann die Datenverarbeitungsvorrichtung einen Automatikmodus aufweisen, in dem ein Gangwechselsignal insbesondere in Abhängigkeit von dem wenigstens einen Schaltparameter automatisch intern, in der Datenverarbeitungsvorrichtung, erzeugt wird, ohne dass es eines Befehls des Radfahrers bedarf.

Beispielsweise ist in der Datenverarbeitungsvorrichtung eine Soll-Trittfrequenz gespeichert und die Datenverarbeitungsvorrichtung ist ausgestaltet, das Gangwechselsignal in Abhängigkeit von einer Abweichung der momentanen Trittfrequenz von der Soll-Trittfrequenz zu erzeugen. Die momentane Trittfrequenz kann zeitlich gemittelt sein, beispielsweise über 3, 5 oder 10 Sekunden. Die Trittfrequenz entspricht dabei der Drehzahl der Tretlagerwelle. Die Datenverarbeitungsvorrichtung ist ausgestaltet, denjenigen einzulegenden Gang zu berechnen, der zu einer Übersetzung des Fahrrad-Schaltgetriebes führt, die bei der momentanen Trittfrequenz nach dem Gangwechsel zu einer Trittfrequenz führt, die der Soll-Trittfrequenz am nächsten kommt. Liegt beispielsweise die derzeitige Trittfrequenz um mehr als einen vorbestimmten Wert über der Soll-Trittfrequenz ab, wird einen oder mehrere Gänge heruntergeschaltet, liegt die derzeitige Trittfrequenz um mehr als einen vorbestimmten Wert unter der Soll-Trittfrequenz wird einen oder mehrere Gänge hochgeschaltet.

Der automatische Gangwechsel kann alternativ oder kumulativ von einem vorbestimmten Soll-Drehmoment beispielsweise an der Tretlagerwelle abhängen. So kann eine Ausführungsform beispielsweise vorsehen, dass ein automatischer Gangwechsel nur stattfindet, wenn das Drehmoment an der Tretlagerwelle eine vorbestimmte Abweichung vom Soll-Drehmoment aufweist.

Der erste und der zweite Kupplungsaktuator können Teil der Steuervorrichtung und/oder Teil des Fahrrad-Schaltgetriebes sein. Bevorzugt sind der erste und der zweite Kupplungsaktuator datenübertragend, kabellos und/oder kabelgebunden, mit der Datenverarbeitungsvorrichtung verbindbar oder verbunden.

Zu Erfassung des wenigstens einen Schaltparameters kann die Steuervorrichtung und/oder das Fahrrad-Schaltgetriebe wenigstens eines der folgenden Sensorsysteme aufweisen.

Das Sensorsystem kann ein Sensorsystem sein, das ausgestaltet ist, ein an einer wenigstens einer Getriebewelle des Fahrrad-Schaltgetriebes anliegendes momentanes Drehmoment als einen Schaltparameter zu erfassen. Dieses Sensorsystem kann unmittelbar an der Getriebewelle angeordnet sein. Das Sensorsystem kann einen Drehmomentsensor aufweisen.

Das Sensorsystem kann ein Sensorsystem sein, das ausgestaltet ist, eine momentane Drehzahl wenigstens einer Getriebewelle des Fahrrad-Schaltgetriebes als Schaltparameter zu erfassen. Dieses Sensorsystem kann unmittelbar an der Getriebewelle angeordnet sein. Das Sensorsystem kann einen Drehzahlmesser, beispielsweise einen Resolver aufweisen.

Das Sensorsystem kann ein Sensorsystem sein, das ausgestaltet ist, eine momentane Winkelstellung wenigstens einer Getriebewelle des Fahrrad-Schaltgetriebes als Schaltparameter zu erfassen. Dieses Sensorsystem kann unmittelbar an der Getriebewelle angeordnet sein. Es kann beispielsweise einen Winkelmesser oder Drehgeber aufweisen.

Das Sensorsystem kann ein Sensorsystem sein, das ausgestaltet ist, eine an wenigstens einer Getriebewelle des Fahrrad-Schaltgetriebes anliegende momentane Antriebsleistung als Schaltparameter zu erfassen. Dieses Sensorsystem kann unmittelbar an der Getriebewelle angeordnet sein. Das Sensorsystem kann einen Leistungsmesser aufweisen. Dieses Sensorsystem kann ausgebildet sein, die Drehzahl und das Drehmoment jeweils als einen Schaltparameter zusätzlich zu erfassen.

Die Getriebewelle kann eine Steuerwelle, eine Antriebswelle oder ein Abtriebswelle oder auch eine Welle des Kupplungsaktuators sein. An jeder dieser Wellen kann sich ein Sensorsystem wie oben beschrieben befinden. Insbesondere können die von dem ersten und/oder zweiten Kupplungsaktuator betätigbaren Kupplungen auf der Steuerwelle angeordnet sein.

Das Sensorsystem kann ein Sensorsystem sein, das ausgestaltet ist, eine momentane Position des ersten Kupplungsaktuators als Schaltparameter zu erfassen. Das Sensorsystem kann am ersten Kupplungsaktuator angeordnet oder in den ersten Kupplungsaktuator integriert sein. Das Sensorsystem kann einen Lagesensor, Winkelmesser oder Drehgeber aufweisen.

Das Sensorsystem kann ein Sensorsystem sein, das eine vom ersten Kupplungsaktuator erzeugte momentane Schaltkraft als Schaltparameter erfasst. Das Sensorsystem kann am ersten Kupplungsaktuator angeordnet oder in den ersten Kupplungsaktuator integriert sein. Das Sensorsystem kann einen Beschleunigungsmesser oder einen Stromsensor oder einen Sensor, der eine elektrische Leistung erfasst, aufweisen.

Das Sensorsystem kann ein Sensorsystem sein, das eine dem ersten Kupplungsaktuator zugeführte momentane Schaltleistung als Schaltparameter erfasst. Das Sensorsystem kann am ersten Kupplungsaktuator angeordnet oder in den ersten Kupplungsaktuator integriert sein. Das Sensorsystem kann einen Sensor aufweisen, der eine dem ersten Kupplungsaktuator zugeführte elektrische Leistung erfasst.

Das Sensorsystem kann ein Sensorsystem sein, das eine momentane Bewegungsgeschwindigkeit des ersten Kupplungssensors als Schaltparameter erfasst. Das Sensorsystem kann am ersten Kupplungsaktuator angeordnet oder in den ersten Kupplungsaktuator integriert sein. Das Sensorsystem kann einen Drehzahlmesser aufweisen.

Das Sensorsystem kann ein Sensorsystem sein, das ausgestaltet ist, eine momentane Position des zweiten Kupplungsaktuators als Schaltparameter zu erfassen. Das Sensorsystem kann am zweiten Kupplungsaktuator angeordnet oder in den zweiten Kupplungsaktuator integriert sein. Das Sensorsystem kann einen Lagesensor, Winkelmesser oder Drehgeber aufweisen.

Das Sensorsystem kann ein Sensorsystem sein, das eine vom zweiten Kupplungsaktuator erzeugte momentane Schaltkraft als Schaltparameter erfasst. Das Sensorsystem kann am zweiten Kupplungsaktuator angeordnet oder in den zweiten Kupplungsaktuator integriert sein. Das Sensorsystem kann einen Beschleunigungsmesser oder einen Stromsensor oder einen Sensor, der eine elektrische Leistung erfasst, aufweisen.

Das Sensorsystem kann ein Sensorsystem sein, das eine dem zweiten Kupplungsaktuator zugeführte momentane Schaltleistung als Schaltparameter erfasst. Das Sensorsystem kann am zweiten Kupplungsaktuator angeordnet oder in den zweiten Kupplungsaktuator integriert sein. Das Sensorsystem kann einen Sensor aufweisen, der eine dem zweiten Kupplungsaktuator zugeführte elektrische Leistung erfasst.

Das Sensorsystem kann ein Sensorsystem sein, das eine momentane Bewegungsgeschwindigkeit des zweiten Kupplungssensors als Schaltparameter erfasst. Das Sensorsystem kann am zweiten Kupplungsaktuator angeordnet oder in den zweiten Kupplungsaktuator integriert sein. Das Sensorsystem kann einen Drehzahlmesser aufweisen.

Das Sensorsystem kann ein Sensorsystem sein, das eine momentane Temperatur des Fahrrad-Schaltgetriebes als Schaltparameter erfasst.

Das Fahrrad-Schaltgetriebe kann in einer Ausgestaltung ein erstes und ein zweites Teilgetriebe aufweisen. Der erste Kupplungsaktuator ist beispielsweise Teil des ersten Teilgetriebes. Das erste Teilgetriebe kann eine Mehrzahl von Schaltstufen aufweisen, denen jeweils eine Kupplung zugeordnet ist. Der erste Kupplungsaktuator ist bevorzugt ausgestaltet, alle oder wenigstens eine Kupplung des ersten Teilgetriebes zu betätigen. Die Kupplungen des ersten Teilgetriebes sind vorzugsweise als schaltbare Freiläufe ausgestaltet. Das erste Teilgetriebe kann in einer anderen Ausgestaltung mehrere Kupplungsaktuatoren aufweisen, wobei jeder Kupplungsaktuator eine andere Kupplung oder andere Kupplungen betätigt.

Die erste und/oder die zweite Kupplung kann jeweils Teil eines Satzes von Kupplungen sein, die nur gemeinsam geschaltet werden können, weil sie beispielsweise über eine Mechanik wie eine Schaltwelle mit Nocken und/oder Kulissenführungen mit einem Kupplungsaktuator verbunden sind.

Der zweite Kupplungsaktuator kann Teil des zweiten Teilgetriebes sein. Das zweite Teilgetriebe kann eine Mehrzahl von Schaltstufen aufweisen, denen jeweils eine Kupplung zugeordnet ist. Der zweite Kupplungsaktuator ist bevorzugt ausgestaltet, alle oder wenigstens eine Kupplung des zweiten Teilgetriebes zu betätigen. Die Kupplungen des zweiten Teilgetriebes sind vorzugsweise als schaltbare Freiläufe ausgestaltet. Das zweite Teilgetriebe kann in einer anderen Ausgestaltung mehrere Kupplungsaktuatoren aufweisen, wobei jeder Kupplungsaktuator eine andere Kupplung oder andere Kupplungen betätigt.

Die einzelnen Schaltstufen des ersten und/oder des zweiten Teilgetriebes können Stirnräder aufweisen, die Teil eines Stirnradgetriebes oder eines Planetengetriebes sind.

Die Schaltstufen eines Teilgetriebes können Losräder aufweisen, die auf einer Steuerwelle drehbar gelagert sind und mittels einer vom ersten oder zweiten Kupplungsaktuator betätigten Kupplung mit der Steuerwelle in wenigstens einer Drehrichtung drehstarr verbindbar sind. Die Losräder des ersten Teilgetriebes können in permanentem Eingriff mit Antriebszahnrädern stehen, die drehfest auf der Antriebswelle des Fahrrad-Schaltgetriebes sitzen. Die Losräder des zweiten Teilgetriebes können permanent mit Abtriebszahnrädern im Eingriff stehen, die drehfest auf einer Abtriebswelle des Fahrrad-Schaltgetriebes sitzen. Eine Zahnradpaarung aus einem Losrad und einem Antriebs- bzw. Abtriebszahnrad bildet jeweils eine Schaltstufe.

Der eingelegte Gang bestimmt sich bei einer solchen Ausgestaltung danach, welches Losrad und damit welche Schaltstufe des ersten Teilgetriebes und welches Losrad und damit welche Schaltstufe des zweiten Schaltgetriebes gerade gegenüber einem Element des Fahrrad-Schaltgetriebes festgelegt ist. Bei einigen Gangwechseln müssen gleichzeitig eine Kupplung des ersten Teilgetriebes und eine Kupplung des zweiten Teilgetriebes betätigt werden. Nachdem diese Kupplungen betätigt sind, können die zuvor, bei Beginn des Gangwechsel, betätigten Kupplungen deaktiviert werden.

Bei dem Element, gegenüber dem das Losrad oder ein Zahnrad einer Schaltstufe durch eine zu schaltende Kupplung festgelegt wird, kann es sich beispielsweise um eine Getriebewelle oder ein gehäuse- bzw. gestellfestes Element handeln, beispielsweise einem Gehäuseteil. Bei der Getriebewelle kann es sich insbesondere um diejenige Getriebewelle handeln, auf der die Losräder gelagert sind, hier beispielsweise die Steuerwelle.

In der Datenverarbeitungsvorrichtung können die Übersetzungsverhältnisse der Schaltstufen des Fahrrad-Schaltgetriebes gespeichert sein. In der Datenverarbeitungsvorrichtung können Übertragungsfunktionen wenigstens einzelner Schaltstufen gespeichert sein. Die Übertragungsfunktionen sind repräsentativ für die Zeitspannen der einzelnen Kupplungen, innerhalb der eine jeweils nicht betätigte Kupplung ab Ausgabe des Betätigungssignals vollständig geschaltet ist. Die Übertragungsfunktionen können von den Schaltparametern abhängen.

Die Datenverarbeitungsvorrichtung kann ausgestaltet sein, die relativen Positionen und/oder Drehzahlen der Antriebsseiten und der Abtriebsseiten der zu betätigenden Kupplungen abhängig von den Schaltstufen des eingelegten Ganges und von der Drehzahl wenigstens zweier Getriebewellen zu berechnen.

Beispielsweise kann die Winkelposition und/oder Drehzahl einer mit der Steuerwelle drehfest verbundenen Antriebsseite einer zu betätigenden Kupplung aus der Drehzahl der Steuerwelle ermittelt werden. Sofern die Winkelposition und/oder Drehzahl der Steuerwelle nicht unmittelbar gemessen wird, kann sie entweder wie oben beschrieben durch zeitliche Ableitung oder Integration einer Bewegungsgröße der Steuerwelle oder anhand der Übersetzung der eingelegten, die Steuerwelle antreibenden Schaltstufe berechnet werden. Ist die Abtriebsseite der zu betätigenden Kupplung drehfest mit einem Losrad verbunden, so kann die Winkelposition und/oder die Drehzahl des Losrades mittels des Übersetzungsverhältnisses der Schaltstufe dieses Losrades anhand der Winkelposition und/oder Drehzahl des mit diesem Losrad kämmenden Abtriebszahnrades bestimmt werden. Die Winkelposition und/oder Drehzahl dieses Abtriebszahnrades ergibt sich aus der Winkelposition und/oder Drehzahl der Abtriebswelle, die sich wiederum aus dem Übersetzungsverhältnis des eingelegten Ganges bestimmt. Auf diese Weise kann die Winkelposition und/oder die Drehzahl jeder Antriebsseite und jeder Abtriebsseite jeder Kupplung des Fahrradschaltgetriebes bestimmt werden.

Das Betätigungssignal, insbesondere die Steuerparameter können dabei abhängig sein von der Drehzahl und/oder der Winkelposition der Antriebs- und der Abtriebsseiten der zu betätigenden Kupplungen, insbesondere der Differenz der Drehzahl und/oder Winkelpositionen der Antriebsseite und der Abtriebsseite einer Kupplung. Aus dieser Differenz ergibt sich die Zeit, innerhalb der die Kupplungen vollständig in Eingriff gelangen können.

In der Datenverarbeitungsvorrichtung kann eine Schaltzeit gespeichert sein, innerhalb der ein zu betätigende Kupplung betätigt, also eingerückt werden kann. Diese Schaltzeit kann beispielsweise der Zeit entsprechen, die für das Ausfahren einer Freilaufklinke oder für die axiale Bewegung einer Klauenkupplung bis zum Eingriff in die Kupplungsverzahnung benötigt wird. Diese Zeit kann von Schaltparametern wie der Temperatur des Fahrrad-Schaltgetriebes oder von dem durch das Fahrrad-Schaltgetriebe durchgeleiteten Drehmoment oder auch von der momentanen Gangstufe und dem einzulegenden Gang abhängen. In einer in der Datenverarbeitungsvorrichtung gespeicherten Übertragungsfunktion können diese Abhängigkeiten der Schaltzeit gespeichert und den momentanen Schaltparametern eine Schaltzeit zugeordnet sein. In einer solchen Ausgestaltung ist die Datenverarbeitungsvorrichtung ausgestaltet, die Schaltzeit abhängig von wenigstens einem Schaltparameter zu berechnen.

In einer Ausführung der Erfindung kann in der Datenverarbeitungsvorrichtung für jeden möglichen Gangwechsel eine Zeitdifferenz gespeichert sein, um die der eine jeweils zu betätigende Kupplungsaktuator in Bezug zu dem anderen zu schaltenden Kupplungsaktuator früher oder später betätigt werden muss.

Im Folgenden ist die Erfindung beispielhaft anhand von Ausführungsbeispielen mit Bezug auf die beigefügten Zeichnungen beschrieben. Nach Maßgabe der obigen Ausführungen kann dabei auf ein Merkmal eines nachstehenden Ausführungsbeispiels verzichtet werden, wenn es bei einer bestimmten Anwendung auf den mit diesem Merkmal verknüpften technischen Effekt nicht ankommen sollte. Umgekehrt kann einem nachstehenden Ausführungsbeispiel ein oben beschriebenes Merkmal hinzugefügt werden, wenn es bei einer bestimmten Anwendung auf den mit diesem Merkmal verknüpften technischen Effekt ankommen sollte.

Im Folgenden sind für Merkmale, die einander hinsichtlich Funktion und/oder Struktur entsprechen, der Einfachheit halber dieselben Bezugszeichen verwendet.

Es zeigen:
- Fig. 1: eine schematische Darstellung eines Fahrrads mit einem Fahrrad-Schaltgetriebe und mit oder ohne Hilfsmotor;
- Fig. 2: eine schematische Perspektivdarstellung eines Fahrrad-Schaltgetriebes;
- Fig. 3: eine schematische Darstellung eines Fahrrad-Schaltgetriebes;
- Fig. 4: eine schematische Darstellung eines schaltbaren Freilaufs;
- Fig. 5: eine schematische Darstellung eines schaltbaren Freilaufs;
- Fig. 6: eine schematische Darstellung eines Fahrrad-Schaltgetriebes;
- Fig. 7: eine schematische Darstellung eines Fahrrad-Schaltgetriebes;
- Fig. 8: eine schematische Darstellung eines Gangwechsels;
- Fig. 9: eine schematische Darstellung eines digitalen Betätigungssignals; und
- Fig. 10: eine schematische Darstellung eines analogen Betätigungssignals.

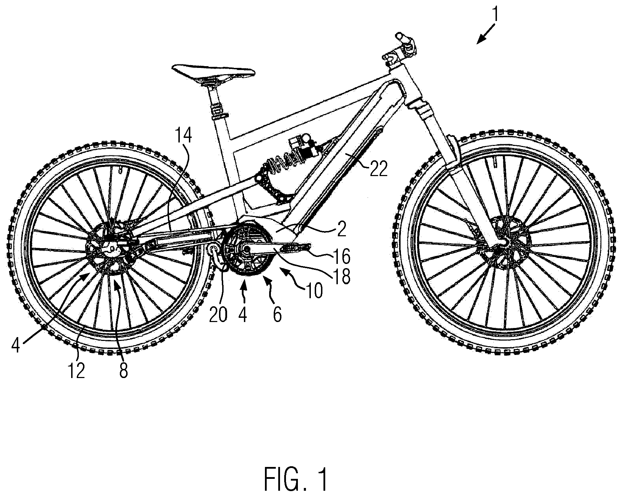

Fig. 1 zeigt ein Fahrrad 1, das mit oder ohne einen Hilfsmotor 2 ausgestaltet sein kann. Ein Fahrrad-Schaltgetriebe 4 befindet sich im Bereich des Tretlagers 6 (Tretlagerschaltung) oder an bzw. in der Hinterradnabe 8 (Nabenschaltung). In einer Variante kann auch eine Tretlagerschaltung mit einer Nabenschaltung kombiniert sein, die Nabenschaltung und die Tretlagerschaltung können dann als zwei Teilgetriebe eines gemeinsamen Getriebes angesehen werden.

Bei dem Fahrrad 1 kann es sich um ein Fahrrad jeglicher Bauform für jedweden Einsatz handeln, beispielsweise ein Fahrrad mit Tiefeinstieg, ein Fahrrad mit Fachwerk-, Trapez-, Kreuz-, Mixte- oder Diamantrahmen, ein teil- oder vollgefedertes Fahrrad, ein Tourenrad, ein Lastenrad, ein Mountainbike, ein Gravelbike, ein Cyclocross-Fahrrad oder ein Rennrad. Das Fahrrad kann einspurig oder auch mehrspurig gestaltet sein.

In allen Fällen wird das Fahrrad 1 mittels eines Pedalantriebs 10 angetrieben und die Kraft des Pedalantriebes 10, gegebenenfalls verstärkt durch den Hilfsmotor 2, wird an das Hinterrad 12 übertragen. Die Übertragung der Antriebsleistung vom Pedalantrieb 10 an das Hinterrad 12 bzw. die Hinterradnabe 8 kann mittels eines Zugmittels 14, beispielsweise einem Riemen oder einer Kette erfolgen.

Der Pedalantrieb 10 weist Pedale 16 auf, die drehbar an Tretkurbeln 18 angebracht sind. Die Tretkurbeln 18 mit den Pedalen 16 sind an einer Tretlagerwelle 20 befestigt.

Das Fahrrad 1 kann einen Akku 22 aufweisen, der als Energiequelle genutzt werden kann, beispielsweise für den Hilfsmotor 2 und/oder Aktuatoren (nicht gezeigt), mit denen sich das Fahrrad-Schaltgetriebe 4 schalten lässt.

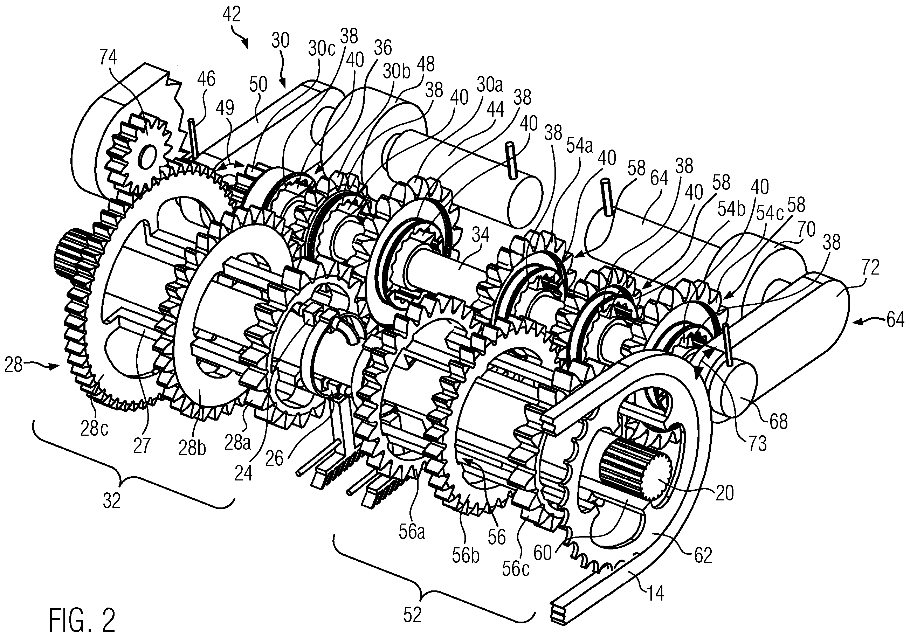

Ein Beispiel eines Fahrrad-Schaltgetriebes 4 ist in Fig. 2 gezeigt. Das Fahrrad-Schaltgetriebe 4 der Fig. 2 ist insbesondere als Tretlagergetriebe geeignet und kann in Verbindung mit einem Hilfsmotor 2 verwendet werden. Mehr Details zu dem beispielhaften Aufbau des Ausführungsbeispiels der Fig. 2 können der Patentanmeldung DE 102022001738.5 entnommen werden, auf die hiermit vollumfänglich Bezug genommen wird. Zusätzlich zu oder anstelle der in Fig. 2 gezeigten Ausgestaltung als Stirnradgetriebe können alle oder einzelne Zahnradpaarungen natürlich auch als Planetengetriebe ausgeführt sein.

Die an die Pedale 16 (Fig. 1) abgegebene Antriebsleistung des Fahrers wird über die Pedalkurbeln 18 (Fig. 1) in die Tretlagerwelle 20 eingeleitet. Von der Tretlagerwelle 20 wird die Antriebsleistung dann über ein Sensorsystem 24 und einen Freilauf 26 an eine Antriebswelle 27 weitergegeben. Die Antriebswelle 27 ist eine Getriebewelle des Fahrrad-Schaltgetriebes 4. Sie stellt die Eingangswelle des Fahrrad-Schaltgetriebes 4 dar. Die Antriebswelle kann wie dargestellt als eine Hohlwelle ausgestaltet sein, in der Antriebswelle 27 die Tretlagerwelle 20 drehbar relativ zur Antriebswelle aufgenommen ist. Die Antriebswelle 27 kann rohrförmig oder käfigförmig ausgestaltet sein. In Fig. 1 ist sie von vier axial verlaufenden Balken oder Streben gebildet.

Die Antriebswelle 27 kann als ein Zahnradblock 28 ausgestaltet, der eine Mehrzahl von drehstarr miteinander verbundenen Antriebszahnrädern 28a, 28b, ... aufweist. Im dargestellten Ausführungsbeispiel sind beispielhaft drei Antriebszahnräder 28a, 28b, 28c dargestellt. Die Antriebszahnräder 28a, 28b, ... sind bevorzugt einstückig miteinander verbunden, so dass der Zahnradblock ein einziges Teil bildet. Der Zahnradblock 28 kann beispielsweise aus dem Vollen gefräst oder aus Einzelteilen zusammengefügt sein.

Das Sensorsystem 24 ist ausgestaltet, das an der Tretlagerwelle anliegende Drehmoment, die Drehzahl und/oder die absolute und/oder relative Winkellage der Tretlagerwelle 20 zu erfassen und jeweils als Schaltparameter in Signalform auszugeben.

Das Sensorsystem 24 kann alternativ oder kumulativ ausgestaltet sein, das am Zahnradblock 28 anliegende Drehmoment, die Drehzahl des Zahnradblocks 28 und/oder die absolute und/oder relative Winkellage des Zahnradblockes 28 zu erfassen und jeweils als Schaltparameter in Signalform auszugeben.

Der Zahnradblock 28 steht im Eingriff mit einem Satz von Losrädern 30. Jedes Antriebszahnrad des Zahnradblockes 30 kämmt mit einem anderen Losrad 30. Entsprechend den drei Antriebszahnrädern 28a, 28b, 28c sind also bei der dargestellten Ausführungsform drei Losräder 30a, 30b und 30c vorgesehen, wobei sich das Antriebszahnrad 28a mit dem Losrad 30a, das Antriebszahnrad 30b mit dem Losrad 30b und das Antriebszahnrad 30c mit dem Losrad 30c ständig im Eingriff befinden.

Der Zahnradblock 28 und die mit ihm kämmenden Losräder 30 bilden ein erstes Teilgetriebe 32. Die Anzahl der Gänge des ersten Teilgetriebes 32 wird durch die Anzahl der Antriebszahnrad/Losrad-Paarungen bestimmt. Im Ausführungsbeispiel der Fig. 2 sind drei solche Paarungen vorgesehen, so dass das erste Teilgetriebe 32 entsprechend drei Gänge aufweist.

Da die Losräder 30 ständig mit den Zahnrädern 28a, 28b, 28a des Zahnradblocks 28 kämmen, wird die Winkellage eines jeden Losrades 30c, 30b und 30a zwangsläufig durch die Winkellage des Zahnradblockes 28 bestimmt. Somit kann anhand der vom Sensorsystem 24 erfassten Winkellage der Tretlagerwelle 20 und/oder des Zahnradblockes 28 die Winkellage eines jeden der Losräder 30 bestimmt werden. Ebenso kann die Drehzahl der Losräder 30 anhand der Drehzahl des Zahnradblockes 28 berechnet werden.

Die Losräder 30 sind auf einer Getriebewelle 34, hier als Steuerwelle bezeichnet, unabhängig voneinander drehbar gelagert. Jedem der Losräder 30 ist eine Kupplung bevorzugt in Form eines schaltbaren Freilaufs 36 zugeordnet, der im betätigten (geschalteten) Zustand ein Drehmoment nur in einer Richtung auf die Steuerwelle 34 überträgt und im nicht betätigten (nicht geschalteten) Zustand ein freies Drehen des jeweiligen Losrades 30a, 30b, 30c auf der Steuerwelle in jeder Drehrichtung erlaubt.

Jeder schaltbare Freilauf 36 weist eine Antriebsseite und eine Abtriebsseite auf. Die Abtriebsseite eines jeden schaltbaren Freilaufs 36 ist von einer Kupplungsverzahnung 38 gebildet, die drehstarr mit dem jeweiligen Losrad 30 verbunden ist, beispielsweise direkt vom Losrad 30 gebildet ist. Die Kupplungsverzahnung 38 kann als eine Stirnverzahnung oder, wie in Fig. 1 dargestellt, als eine Innenverzahnung ausgestaltet sein.

Die schaltbaren Freiläufe 36 sind in Fig. 1 beispielhaft als Klinkenfreilauf ausgeführt und weisen eine oder mehr Freilaufklinken 40 auf, die mit jeweils einer der Nuten der Innenverzahnung 35 in Eingriff gebracht werden können. Anstelle von einzelnen Freilaufklinken 40 kann eine Zahnscheibe zum Beispiel in Form einer Klauenkupplung vorhanden sein. Der Ausdruck "Freilaufklinke" soll hier auch die Zähne oder Klauen eine Zahnscheibe umfassen. Im nicht betätigten Zustand ist die wenigstens eine Freilaufklinke außer Eingriff mit der Kupplungsverzahnung 38 bewegt. Die Freilaufklinken 40 der Kupplungen sind mit der Steuerwelle 34 drehstarr verbunden. Drehstarr bedeutet hier insbesondere, dass die Freilaufklinken sich zwar im Rahmen ihrer Freilauffunktion relativ zur Steuerwelle 34 - in erster Linie axial - bewegen können, jedoch in einer Drehrichtung ein Drehmomente auf die Steuerwelle 34 übertragen können.

Die wenigstens eine Antriebsseite der schaltbaren Freiläufe 36 wird von der wenigstens einen Freilaufklinke 40 gebildet.

Die Kupplungsverzahnungen 38 befinden sich jeweils auf den Losrädern 30, können sich jedoch auch auf der Steuerwelle 34, also auf der Antriebsseite eines schaltbaren Freilaufs 36 befinden. In diesem Fall befindet sich die wenigstens eine Freilaufklinke auf dem jeweiligen Losrad und damit auf der Abtriebsseite.

Bei geschaltetem bzw. betätigtem Freilauf wird das Antriebsmoment in einer Drehrichtung von demjenigen Losrad, dessen Freilauf betätigt ist, an die Steuerwelle 34 übertragen. Hierzu muss die wenigstens eine Freilaufklinke 40 in die Kupplungsverzahnung 38 eingerastet sein.

Um die Kupplungen bzw. schaltbaren Freiläufe der Losräder 30 des ersten Teilgetriebes 32 zu schalten, ist ein erster Kupplungsaktuator 42 vorgesehen. Der Kupplungsaktuator 42 betätigt die schaltbaren Freiläufe 36 der Losräder 30 durch einen elektrischen, magnetischen und/oder elektromagnetischen Antrieb.

Der erste Kupplungsaktuator 42 weist in der hier dargestellten Ausgestaltung einen Aktuatormotor 44 und Sensorsystem 46 auf. Das Sensorsystem 46 ist ausgestaltet, eine Position, beispielsweise eine absolute oder relative Winkelstellung, eine Schaltgeschwindigkeit und/oder eine Schaltleistung des ersten Kupplungsaktuators 48 zu erfassen und jeweils als Schaltparameter in Signalform auszugeben. Das Sensorsystem 46 kann einen Positionssensor, beispielsweise einen Drehwinkelsensor, einen Drehzahlsensor, einen Drehmomentsensor und/oder einen Stromsensor aufweisen. Der Stromsensor kann ausgestaltet sein, einen Strom, eine Spannung und oder eine elektrische Leistung des Aktuatormotors 44 zu erfassen.

Der Kupplungsaktuator 42 erzeugt bei dem dargestellten Ausführungsbeispiel eine rotatorische Schaltbewegung 49. Mit der Schaltbewegung 49 werden die schaltbaren Freiläufe aktiviert. In anderen Ausgestaltungen kann die Schaltbewegung 49 auch translatorisch sein. Auch eine Kombination einer rotatorischen und translatorischen Schaltbewegung 49 ist möglich.

Das Sensorsystem 46 kann insbesondere ausgebildet sein, die Position der wenigstens einen Freilaufklinken 40 absolut oder relativ, insbesondere relativ zur Steuerwelle 34 zu erfassen. Das Sensorsystem 46 kann ferner ausgebildet sein, die Drehzahl der Steuerwelle 34, die Betätigungsgeschwindigkeit des Kupplungsaktuators 42 und/oder die Leistung des ersten Kupplungsaktuators 42 zu erfassen.

Der erste Kupplungsaktuator 42 kann ferner ein erstes Aktuatorgetriebe 48, beispielsweise ein Untersetzungsgetriebe, und/oder ein erstes Überlagerungsgetriebe 50 aufweisen.

Über eine in Fig. 1 nicht dargestellte Mechanik, die sich innerhalb der Steuerwelle befinden kann, schaltet der erste Kupplungsaktuator 42 die schaltbaren Freiläufe 36 des ersten Teilgetriebes 32, indem er die jeweiligen Freilaufklinken 40 in oder außer Eingriff mit der Kupplungsverzahnung 38 bewegt.

Vom ersten Teilgetriebe 32 wird das Drehmoment über die Steuerwelle 23 in das zweite Teilgetriebe 52 weitergeleitet. Das zweite Teilgetriebe 52 ist bei dem hier dargestellten Fahrrad-Schaltgetriebe 4 mit dem ersten Teilgetriebe 32 baulich vereint. So verbindet die Steuerwelle 34 das erste und das zweite Teilgetriebe 32, 52.

Eine bauliche Vereinigung des ersten und der zweiten Teilgetriebes 32, 52 ist allerdings nicht zwingend. So können das erste und das zweite Teilgetriebe 32, 52 auch räumlich getrennt voneinander angeordnet sein. Beispielsweise kann sich das erste Teilgetriebe 32 am Tretlager und das zweite Teilgetriebe 52 an der Hinterradnabe 8 (Fig. 1) befinden.

Bei der in Fig. 2 dargestellten beispielhaften Ausgestaltung eines Fahrrad-Schaltgetriebes sind das erste und das zweite Teilgetriebe 32, 52 ähnlich aufgebaut. Beides sind Stirngetriebe. In einer Variante kann jedoch ein Teilgetriebe ein Stirnradgetriebe und ein anderes Teilgetriebe ein Planetengetriebe sein. Auch können beide Teilgetriebe Planetengetriebe sein. Die Getriebewellen der Teilgetriebe 32, 52 können parallele oder nicht parallele Rotationsachsen besitzen. Auch der Aufbau des Getriebes ausschließlich mit schaltbaren Freiläufen ist nur als beispielhaft anzusehen. So ist es auch möglich, einzelne schaltbare Freiläufe durch selbstbetätigte Freiläufe zu ersetzen. Ferner ist es möglich, einzelne Kupplungen als formschlüssige oder reibschlüssige Kupplungen nach dem Stand der Technik zu gestalten.

Das zweite Teilgetriebe 52 gemäß Fig. 1 weist eine Mehrzahl abtriebsseitiger Losräder 54 auf, die auf der Steuerwelle 34 unabhängig voneinander drehbar gelagert sind. Es können beispielsweise drei Losräder 54a, 54b, 54c vorgesehen sein.

Die Losräder 54a, 54b, ... des zweiten Teilgetriebes 52 kämmen mit Abtriebszahnrädern 56a, 56b, ... Die Abtriebszahnräder 56a, 56b, ... sind drehstarr miteinander verbunden. Sie können - wie die Zahnräder 28a, 28b, ...- zu einem Zahnradblock 56 baulich vereint sein. Der Zahnradblock 56 kann beispielsweise von einem einzigen monolithischen Körper gebildet sein. Er kann allerdings auch aus mehreren Elementen zusammengefügt sein. Die Anzahl der Abtriebszahnräder 56a, 56b, ... entspricht der Anzahl der Losräder 54 des zweiten Teilgetriebes 52. Jedes Losrad 54 kämmt mit einem anderen Abtriebszahnrad 56. So kämmt beispielsweise in Fig. 1 das Losrad 54a mit dem Abtriebszahnrad 56a, das Losrad 54b mit dem Abtriebszahnrad 56b und das Losrad 54c mit dem Abtriebszahnrad 56c.

Jedes der abtriebsseitigen Losräder 54 ist, wie bei jedes der antriebsseitigen Losräder 30, mit Kupplungen, bevorzugt schaltbaren Freiläufen 58 versehen. Die schaltbaren Freiläufe 58 der abtriebsseitigen Losräder 54 können wie oben bei den antriebsseitigen Losrädern 30 beschrieben ausgestaltet sein. Insbesondere können die schaltbaren Freiläufe 58 der abtriebsseitigen Losräder 56 wie die schaltbaren Freiläufe 36 der antriebsseitigen Losräder 30 ausgestaltet sein und jeweils wenigstens eine Freilaufklinke 40 sowie eine dazu komplementäre Kupplungsverzahnung 38 aufweisen. Die schaltbaren Freiläufe 58 übertragen im betätigten bzw. geschalteten Zustand ein Drehmoment nur in einer Drehrichtung von der Steuerwelle 34 zum jeweiligen Losrad 56a, 56b, 56c. Die schaltbaren Freiläufe 58 können identisch zu den schaltbaren Freiläufen 36 ausgebildet sein. Aufgrund der Richtung des Momenten- bzw. Leistungsflusses durch das zweite Teilgetriebe 52 bildet die wenigstens eine Freilaufklinke 40 eines schaltbaren Freilaufs 58 jeweils die Antriebsseite dieser Kupplung, während die Kupplungsverzahnung 38 auf den Losrädern die Abtriebsseite darstellt. Wie bereits oben bei den schaltbaren Freiläufen 36 beschrieben, kann bei einem schaltbaren Freilauf 58 die wenigstens eine Freilaufklinke auch abtriebsseitig und die Kupplungsverzahnung 38 antriebsseitig angeordnet sein.

Das Antriebsmoment wird von jeweils demjenigen Losrad 54a, 54b, 54c an das mit diesem Losrad kämmende Abtriebszahnrad 56a, 56b, 56c übertragen, dessen Kupplung gerade betätigt ist.

Von den Abtriebszahnrädern 56a, 56b, 56c wird die Antriebsleistung an eine Abtriebswelle 60 übertragen. Die Abtriebswelle 60 ist eine weitere Getriebewelle des Fahrrad-Schaltgetriebes 4. Die Antriebsleistung wird also von den Pedalen 16 über die Antriebswelle 27, die Steuerwelle 34 und die Abtriebswelle 60 durch das Fahrrad-Schaltgetriebe 4 geleitet.

Die Abtriebswelle 60 kann als eine Hohlwelle ausgestaltet sein, in der die Tretlagerwelle 20 drehbar aufgenommen ist. Die Abtriebswelle 60 kann integraler Bestandteil des Zahnradblocks 56 des zweiten Teilgetriebes 52 sein. Die Abtriebshohlwelle 60 kann rohrförmig oder käfigartig ausgestaltet sein. Bei dem dargestellten Ausführungsbeispiel ist die Abtriebshohlwelle 60 von vier axial verlaufenden Verbindungsstreben gebildet.

Die Abtriebshohlwelle 60 leitet das Drehmoment auf eine vordere Riemenscheibe 62 weiter, die dann die Antriebsleistung über das Zugmittel 14, beispielsweise einen Riemen, an das Hinterrad 12 (Fig. 1) leitet. Die vordere Riemenscheibe 62 kann als Kettenblatt 8 ausgeführt sein, wenn als Zugmittel 14 eine Kette verwendet wird.

Die schaltbaren Freiläufe 58 des zweiten Teilgetriebes 52 können von einem zweiten Kupplungsaktuator 64 betätigt werden. Der zweite Kupplungsaktuator 64 kann in einer Ausgestaltung so aufgebaut sein wie der Kupplungsaktuator 42 des ersten Teilgetriebes 32. So kann der zweite Kupplungsaktuator 64 einen zweiten Aktuatormotor 66 und ein Sensorsystem 68 aufweisen.

Das Sensorsystem 68 ist bevorzugt wie das Sensorsystem 46 ausgebildet. Das Sensorsystem 68 ist beispielsweise ausgestaltet, eine Position, beispielsweise eine absolute oder relative Winkelstellung, eine Schaltgeschwindigkeit und/oder eine Schaltleistung des zweiten Kupplungsaktuators 64 zu erfassen und in Signalform auszugeben. Das Sensorsystem 68 kann einen Positionssensor wie beispielsweise einen Drehwinkelsensor, einen Drehzahlsensor, einen Drehmomentsensor und/oder einen Stromsensor aufweisen. Das Sensorsystem 68 kann insbesondere ausgebildet sein, die Position der Freilaufklinken 40 absolut oder relativ, insbesondere relativ zur Steuerwelle zu erfassen.

Das Sensorsystem 68 kann ferner ausgebildet sein, die Drehzahl der Steuerwelle 34, die Betätigungsgeschwindigkeit des zweiten Kupplungsaktuators 64 und/oder die Leistung des zweiten Kupplungsaktuators 64 zu erfassen. Das Sensorsystem 68 des zweiten Kupplungsaktuators kann auch einen Stromsensor aufweisen, der ausgestaltet ist, einen Strom, eine Spannung und/oder eine elektrische Leistung, mit der der zweite Kupplungsaktuator 64 betätigt wird, zu erfassen und jeweils als Schaltparameter in Signalform auszugeben.

Der zweite Kupplungsaktuator 64 kann ferner ein zweites Aktuatorgetriebe 70 und ein zweites Überlagerungsgetriebe 72 aufweisen.

In vorteilhafter Ausgestaltung, die unabhängig ist von der übrigen Ausgestaltung des Fahrrad-Schaltgetriebes, befinden sich der erste Aktuatormotor 44 und der zweite Aktuatormotor 64 nicht in Fahrtrichtung neben der Steuerwelle 34.

Der zweite Kupplungsaktuator 64 erzeugt eine Schaltbewegung 73, die auch hier nur beispielhaft rotatorisch ist. Die Schaltbewegung 73 kann, wie auch die Schaltbewegung 49 des ersten Kupplungsaktuators 42 translatorisch oder rotatorisch-translatorisch sein. Die Schaltbewegung 73 des zweiten Kupplungsaktuators 42 aktiviert die von ihm betätigten schaltbaren Freiläufe 58.

Falls ein Hilfsmotor 2 (Fig. 1) vorhanden ist, kann dessen Leistung über ein Hilfsmotor-Antriebszahnrad 74 in das erste Teilgetriebe 32, hier die Steuerwelle 34 eingeleitet werden.

Der Akku 22 (Fig. 1) kann dazu verwendet werden, die Kupplungsaktuatoren 42, 64 mit Energie zu versorgen, ohne dass hierzu das Fahrrad 1 mit einem Hilfsmotor 2 versehen sein muss.

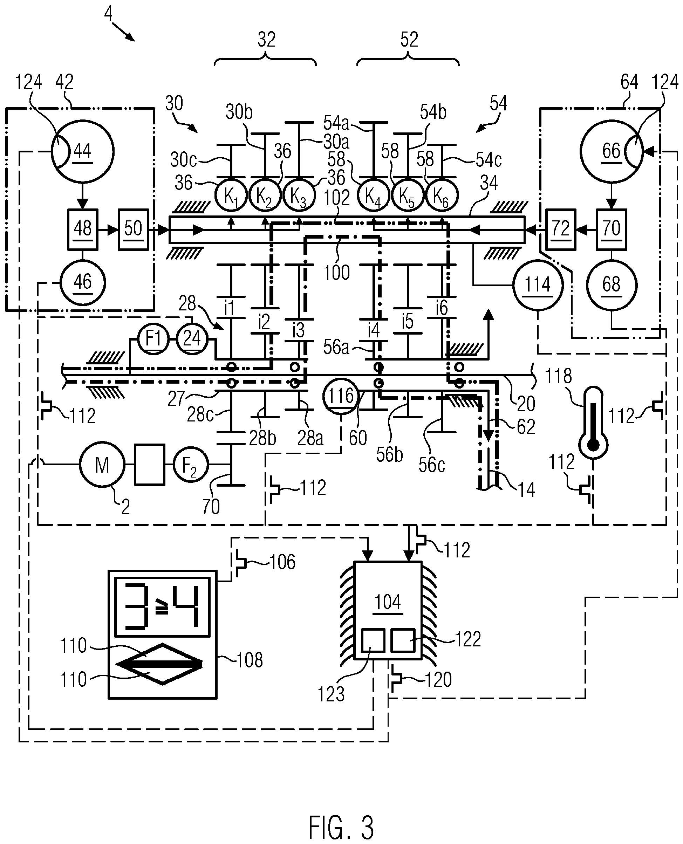

Fig. 3 zeigt schematisch ein weiteres Fahrrad-Schaltgetriebe 4, das sehr ähnlich aufgebaut ist wie das Fahrrad-Schaltgetriebe 4 der Fig. 2.

Das Fahrrad-Schaltgetriebe 4 weist in jedem der beiden Teilgetriebe 32, 52 drei Schaltstufen auf. Die Schaltstufen des ersten Teilgetriebes 32 sind mit steigender Untersetzung i1, i2 und i3 bezeichnet. Die Schaltstufen des zweiten Teilgetriebes 52 sind mit steigender Untersetzung i4, i5 und i6 benannt. Selbstverständlich kann in jedem Teilgetriebe auch eine jeweils unterschiedliche Anzahl von Schaltstufen vorhanden sein. So kann anstelle der hier dargestellten 3 x 3 Kombination auch eine 2 x 4, ein 3 x 6 oder jede andere Kombination verwendet werden. An der folgenden Beschreibung ändert sich qualitativ bei einer Änderung der Anzahl der Schaltstufen in einem der Teilgetriebe 32, 52 nichts.

Jede der Schaltstufen i1 bis i6 ist mit jeweils einer Kupplung K₁ bis K₆ versehen, die einem Losrad 30a bis 30c, 54a bis 54c zugeordnet bzw. an diesen Losrädern angeordnet ist. So wird das Losrad 30c der Gangstufe i1 über die schaltbare Kupplung K₁ mit der Steuerwelle 34 drehmomentübertragend verbunden. Das Losrad 30b der Schaltstufe i2 wird über die Kupplung K₂ mit der Steuerwelle 34 drehmomentübertragend verbunden, während das Losrad 30a der Schaltstufe i3 über die schaltbare Kupplung K₃ mit der Steuerwelle 34 drehmomentübertragend verbunden wird.

Beim zweiten Teilgetriebe 52 ist dies ebenso: Das abtriebsseitige Losrad 54a der Schaltstufe i4 wird über die schaltbare Kupplung K₄ mit der Steuerwelle 34 drehmomentübertragend verbunden. Das abtriebsseitige Losrad 54b der Schaltstufe i5 wird über die schaltbare Kupplung K₅ und das abtriebsseitige Losrad 54c der Schaltstufe i6 ist über die Kupplung K₆ mit der Steuerwelle 34 drehmomentübertragend verbunden.

Jede der Kupplungen K₁, ..., K₆ kann als ein schaltbarer Freilauf 36, 58 ausgestaltet sein, wie er oben bei Fig. 2 beschrieben ist. Durch die drei Schaltstufen i1 bis i3 des ersten Teilgetriebes und die drei Schaltstufen i4 bis i6 des zweiten Teilgetriebes 52 stehen insgesamt neun Gänge zur Verfügung. F₁ und F₂ bezeichnen nicht-schaltbare Freiläufe, die zwischen den Sensorsystem 24 und der Tretlagerwelle 20 (F₁) und dem Motor 2 und der Tretlagerwelle 20 (F₂) angeordnet sein können.

Die Übersetzungen der Schaltstufen i1, ..., i6 sind bevorzugt so gewählt, dass beim Hochschalten eine Schaltstufe des einen Teilgetriebes konstant geschaltet bleibt und nacheinander sämtliche Schaltstufen des anderen Teilgetriebes durchgeschaltet werden. Sind sämtliche Schaltstufen des anderen Teilgetriebes durchgeschaltet, so wird auf die die nächste Schaltstufe des einen Teilgetriebes gleichzeitig zurück auf die Ausgangsschaltstufe des anderen Schaltstufe geschaltet, bis alle Schaltstufen durchgeschaltet sind. Beim Herunterschalten kehrt sich dies entsprechend um.

So kann beispielsweise der erste Gang, der Gang mit der kleinsten Übersetzung dann eingelegt sein, wenn in Fig. 3 der Momentenfluss durch die Schaltstufen i3 und i6 geleitet ist, also die Kupplungen K₃ und K₆ betätigt sind. Beim sequenziellen Hochschalten wird bei eingelegter Schaltstufe i3 zunächst von der Schaltstufe i6 auf die Schaltstufe i5 in den zweiten Gang und dann von der Schaltstufe i5 auf die Schaltstufe i4 in den dritten Gang hochgeschaltet.

Das Hochschalten von Schaltstufe i6 zu Schaltstufe i5 erfolgt durch Betätigen der Kupplung K₅ und gleichzeitiges oder anschließendes Deaktivieren der Kupplung K₆. Aufgrund der Ausgestaltung als schaltbare Freiläufe 36 können beide Kupplungen K₅ und K₆ kurz betätigt bleiben, da der Freilauf bei der Kupplung K₆ durchdrehen wird. Es sollte allerdings vermieden werden, dass beide Kupplungen K₅ und K₆ gleichzeitig deaktiviert bzw. ausgekuppelt sind, weil dann der Fahrer ins Leere tritt, was zu Verletzungen führen kann.

Zum Hochschalten vom zweiten in den dritten Gang wird die Kupplung K₄ betätigt und die Kupplung K₅ ausgekuppelt. Auch hier gilt aufgrund des Freilaufs, dass beide Kupplungen K₄ und K₅ eigentlich eingekuppelt bleiben können. Die Kupplung K₅ wird lediglich gelöst, um Energieverluste und Lärm zu vermeiden.

Ist ein Teilgetriebe durchgeschaltet, also im vorliegenden Beispiel die Schaltstufe i4 des zweiten Teilgetriebes 52 erreicht, so muss beim weiteren Hochschalten die nächste Schaltstufe des anderen - hier ersten - Teilgetriebes geschaltet werden und gleichzeitig in dem anderen Teilgetriebe zurück auf die niedrigste Übersetzung gesprungen werden. Beim Schalten von beispielsweise dem dritten Gang 100, in dem der Momentenfluss durch die Schaltstufen i3 und i4 verläuft, in den vierten Gang 102 muss der Momentenfluss durch die Schaltstufen i2 und i6 gelegt werden. Dies bedeutet, dass bei diesem Schaltvorgang zwei Kupplungen gleichzeitig betätigt werden müssen, nämlich die Kupplungen K₂ und K₆. Ferner müssen die Kupplung K₃ und K₄ ausgekuppelt werden, nachdem die Kupplungen K₂ und K₆ eingekuppelt sind.

Wenn bei einem solchen Gangwechsel die beiden zu betätigenden Kupplungen nicht exakt gleich einkuppeln, können kurzzeitig unerwünschte Zwischengänge eingelegt werden. So sollten beispielsweise bei dem oben beschriebenen Gangwechsel die Kupplungen K₂ und K₆ idealerweise gleichzeitig eingekuppelt werden. Kuppelt die Kupplung K₂ vor der Kupplung K₆ ein, so ist temporär der sechste Gang eingelegt, bevor mit der Betätigung der Kupplung K₆ der vierte Gang eingelegt ist. Wird die Kupplung K₄ gelöst, bevor die Kupplung K₆ betätigt ist, tritt der Radfahrer ins Leere.

Eine gleichzeitige Betätigung zweier Kupplungen von insbesondere zwei unterschiedlichen Teilgetrieben ist jedoch nicht nur bei einem sequenziellen Hochschalten, sondern auch bei einem direkten Gangwechsel unter Überspringen dazwischenliegender Gänge erforderlich. Soll beispielsweise aufgrund einer plötzlichen starken Steigung von einem sehr hohen in einen sehr niedrigen Gang geschaltet werden, sind ebenfalls zwei Kupplungen der zwei Teilgetriebe direkt zu schalten. So ist beispielsweise im achten Gang der Momentenfluss über die Schaltstufen i1 und i5 geleitet, die Kupplungen K₁ und K₅ sind betätigt, die restlichen Kupplungen ausgekuppelt. Soll nun direkt auf den vierten Gang geschaltet werden, so sind die Kupplungen K₂ und K₆ gleichzeitig zu aktivieren, um Leertritte und Zwischengänge zu vermeiden.

Bei der Ausführungsform der Fig. 3 wird die exakte Synchronisation durch eine Datenverarbeitungsvorrichtung 104 ermöglicht, die die Kupplungsaktuatoren 42, 64 steuert. Die Datenverarbeitungsvorrichtung 104 ist ausgestaltet, ein Gangwechselsignal 106 zu empfangen, das einen von einem Radfahrer ausgelösten Befehl zum Ausführen eines Gangwechsels direkt von einem (eingelegten) in einen anderen (einzulegenden) Gang ist.

Die Datenverarbeitungsvorrichtung 104 kann eine oder mehrere elektronische Bauteile, beispielsweise einen Speicher, eine drahtgebundene und/oder drahtlose Eingangsschnittstelle, eine drahtgebundene und/oder drahtlose Ausgangsschnittstelle, einen Computerchip und/oder ein ASIC aufweisen.

Zur Erzeugung des Gangwechselsignals 106 kann eine Steuervorrichtung 108 vorgesehen sein, in der die Datenverarbeitungsvorrichtung 104 baulich integriert sein kann. Die Steuervorrichtung 108 kann wenigstens ein für den Radfahrer zugängliches Betätigungselement 110 aufweisen, das als ein Taster oder ein Widget ausgestaltet sein kann. Eine Betätigung des Betätigungselement 110 löst die Erzeugung des Gangwechselsignals 106 aus. Das Gangwechselsignal 106 kann ein Herauf- oder ein Herunterschalten von dem einen Gang in den anderen Gang repräsentieren. Dabei müssen, wie oben bereits erwähnt, der eine und der andere Gang nicht unmittelbar aufeinander folgen, sondern es kann auch direkt von einem Gang in einen beliebigen anderen Gang gesprungen werden, was dann im Gangwechselsignal 106 entsprechend repräsentiert bzw. kodiert ist.

Das Gangwechselsignal 106 kann wenigstens einen Gangwechselparameter enthalten. Ein Gangwechselparameter kann den einen, eingelegten, Gang und ein anderer Gangwechselparameter den anderen, einzulegenden Gang repräsentieren. Anhand der Gangwechselparameter kann die Datenverarbeitungsvorrichtung 104 die zu betätigenden und die zu lösenden Kupplungen 36, 58 sowie die Schaltrichtung identifizieren.

Der Gangwechselparameter kann auch als ein Inkrementalsignal ausgestaltet sein, das angibt, um wieviel Gänge herauf oder herabgeschaltet werden soll.

Die Datenverarbeitungsvorrichtung 104 ist ferner ausgestaltet, wenigstens einen Schaltparameter 112 zu empfangen, der repräsentativ ist für einen Zustand des Schaltgetriebes 4. Der Schaltparameter 112 ermöglicht es, die Kupplungsaktuatoren 42, 64 so zu steuern, dass beim Wechsel von dem einen direkt in den anderen Gang die beiden zu betätigenden Kupplungen exakt zur gleichen Zeit geschaltet werden und das Antriebsmoment übertragen. Der Schaltparameter 112 repräsentiert Zustandsgrößen, die den Gangwechsel, insbesondere das Verhalten der Kupplungen bzw. schaltbaren Freiläufe, beeinflussen.

Zur Erzeugung des Schaltparameters 112 weist das Schaltgetriebe 4 eine Reihe von Sensorsystemen auf, die als Teil der Steuervorrichtung 108 angesehen werden können. Die Sensorsysteme geben, wie oben bereits erläutert, die von ihnen erfassten Messgrößen jeweils als Schaltparameter 112 in Signalform aus.

In Fig. 2 ist beispielhaft ein Sensorsystem 24 an der Tretlagerwelle 20, ein Sensorsystem 46 des ersten Kupplungsaktuators 44 und ein Sensorsystem 68 des zweiten Kupplungsaktuators 66 gezeigt.

Das Sensorsystem 24 stellt wenigstens einen Schaltparameter 112 aus der folgenden Gruppe von Schaltparametern zur Verfügung: Die (Winkel-)Position der Tretlagerwelle 20, die Drehzahl der Tretlagerwelle 20, das an der Tretlagerwelle 20 wirkende Drehmoment.

Da die Zahnräder 28a, 28b, ... drehstarr mit der Tretlagerwelle verbunden sind und mit den Losrädern 30a, 30b, ... kämmen, lässt sich aus der Position, der Drehzahl und/oder dem Drehmoment an der Tretlagerwelle jeweils die Position, die Drehzahl und das Drehmoment der Zahnräder 28a, 28b und der Losräder 30a, 30b, ... berechnen.

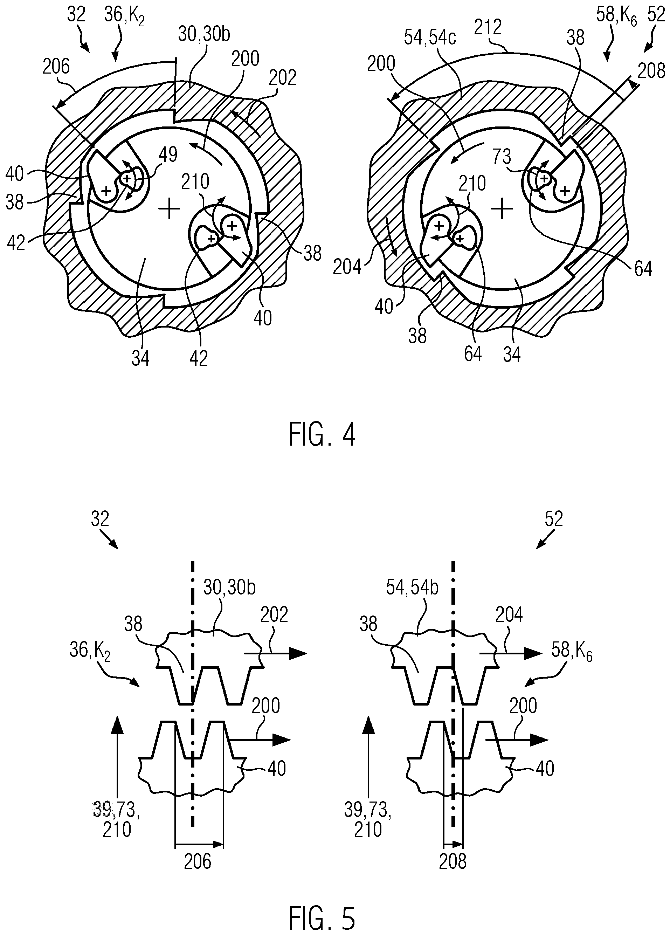

Das Sensorsystem 46 des ersten Kupplungsaktuators 42 stellt wenigstens einen Schaltparameter 112 aus der folgenden Gruppe von Schaltparametern zur Verfügung: Die Position des ersten Kupplungsaktuators, die Schaltgeschwindigkeit des ersten Kupplungsaktuators, die dem ersten Kupplungsaktuator zugeführte elektrische Leistung. Aus der Position bzw. Schaltgeschwindigkeit des ersten Kupplungsaktuators lässt sich die Position bzw. Bewegungsgeschwindigkeit der vom ersten Kupplungsaktuator 42 angetriebenen Freilaufklinken 40 (Fig. 1) entlang ihrer Einkuppelbewegung bestimmen (s. Fig. 4 und 5). Die Einkuppelbewegung der wenigstens einen Freilaufklinke 40 wird durch eine Schaltbewegung 49 des diese Freilaufklinke antreibenden Kupplungsaktuators 42 erzeugt, wobei zwischen dem Aktuatormotor und der wenigstens einen Freilaufklinke mechanische Mittel zur Bewegungsübertragung wie Hebel, Nocken, Kulissenführungen, Exzenter etc. angeordnet und Teil des Kupplungsaktuators sein können.

Aus der dem ersten Kupplungsaktuator 42 zugeführten elektrischen Leistung lässt sich ebenfalls die Bewegungsgeschwindigkeit der vom ersten Kupplungsaktuator 42 angetriebenen Freilaufklinken 40 des ersten Teilgetriebes 32 berechnen. Zu diesen Berechnungen ist bevorzugt die Datenverarbeitungsvorrichtung 104 ausgestaltet.

Das Sensorsystem 68 des zweiten Kupplungsaktuators 64 ist bevorzugt genauso ausgestaltet wie das Sensorsystem 46 des ersten Kupplungsaktuators 42. Das Sensorsystem 68 des zweiten Kupplungsaktuators 64 stellt wenigstens einen Schaltparameter 112 aus der folgenden Gruppe von Schaltparametern zur Verfügung: Die Position des zweiten Kupplungsaktuators, die Schaltgeschwindigkeit des zweiten Kupplungsaktuators, die dem zweiten Kupplungsaktuator zugeführte elektrische Leistung. Aus der Position bzw. Schaltgeschwindigkeit des ersten Kupplungsaktuators lässt sich die Position bzw. Bewegungsgeschwindigkeit der vom zweiten Kupplungsaktuator 64 angetriebenen Freilaufklinken 40 bestimmen. Aus der dem zweiten Kupplungsaktuator 42 zugeführten elektrischen Leistung lässt sich ebenfalls die Bewegungsgeschwindigkeit der vom zweiten Kupplungsaktuator 42 angetriebenen Freilaufklinken 40 des zweiten Teilgetriebes 52 berechnen. Zu diesen Berechnungen ist bevorzugt die Datenverarbeitungsvorrichtung 104 ausgestaltet.

An der Steuerwelle 34 kann ein Sensorsystem 114 vorgesehen sein. Das Sensorsystem 114 kann einen Positionssensor, beispielsweise einen Drehwinkelsensor aufweisen, der die Winkellage der Steuerwelle 31 als Schaltparameter erfasst. Wie bei allen anderen Sensorsystemen auch, kann aus der zeitlichen Abfolge der erfassten Positionen durch zeitliche Ableitung eine Geschwindigkeit, bei einem Drehwinkelsensor beispielsweise die Drehzahl - oder gleichbedeutend - Geschwindigkeit, berechnet werden. Alternativ oder kumulativ kann das Sensorsystem 114 auch einen Drehzahlsensor aufweisen, der die Drehzahl der Steuerwelle 34 misst und als Schaltparameter 112 ausgibt. Alternativ oder kumulativ kann das Sensorsystem 114 der Steuerwelle einen Drehmomentsensor aufweisen, so dass das an der Steuerwelle 34 anliegende Drehmoment gemessen und als Schaltparameter 112 ausgegeben werden kann.

An der Abtriebswelle 60 kann ein Sensorsystem 116 angeordnet sein, das die Winkellage, Drehzahl und/oder das an Abtriebswelle 60 anliegende Drehmoment misst und jeweils als Schaltparameter 112 ausgibt. Hierzu kann das Sensorsystem 116 einen Positionssensor, einen Drehzahlsensor und/oder einen Drehmomentsensor aufweisen.

Ein weiteres Sensorsystem 118 kann ausgestaltet sein, die Temperatur des Schaltgetriebes zu erfassen und als Schaltparameter 112 ausgeben.

Die Datenverarbeitungsvorrichtung 104 ist ausgestaltet, abhängig von dem wenigstens einen Schaltparameter 112 und dem Gangwechselsignal 106 ein Betätigungssignal 120 zu erzeugen.

Das Betätigungssignal 120 wird an den ersten und zweiten Kupplungsaktuator 42, 64 übertragen, deren Betätigung es auslöst.

Das Betätigungssignal 120 enthält Steuerdaten, die repräsentativ sind für einen zeitlichen Abstand zwischen einer Betätigung des ersten Kupplungsaktuators und der Betätigung des zweiten Kupplungsaktuators und/oder für eine Schaltgeschwindigkeit des ersten Kupplungsaktuators 44 und eine Schaltgeschwindigkeit des zweiten Kupplungsaktuators 64.

Durch die im Betätigungssignal enthaltenen Steuerdaten soll sichergestellt sein, dass die für einen Gangwechsel zu betätigenden Kupplungen 36 zur gleichen Zeit aktiviert werden. Die Steuerdaten können zudem eine Kennung enthalten, die repräsentativ ist für den zu betätigenden Kupplungsaktuator.

Wenn jede Kupplung K₁ bis K₆ einzeln von einem separaten Kupplungsaktuator angetrieben ist, so können die für die zu betätigenden Kupplungsaktuatoren repräsentativen Steuerdaten eine Adresse des jeweils zu betätigenden Kupplungsaktuators darstellen.

Mit der Datenverarbeitungsvorrichtung 104 lässt sich eine rückgekoppelte Regelung des Gangwechsels implementieren. So kann während eines Gangwechsels das Betätigungssignal 120 in Abhängigkeit von den momentanen Schaltparametern 112 verändert werden. Die Datenverarbeitungsvorrichtung 104 kann zu diesem Zweck eine Routine 122 zur Kraft-, Lage- und oder Geschwindigkeitsregelung der Kupplungsaktuatoren 42, 64 aufweisen.

Die Datenverarbeitungsvorrichtung 104 kann ferner eine Übertragungsfunktion 123 aufweisen, die beispielsweise experimentell bestimmte Abhängigkeiten der Steuerdaten von dem wenigstens einen Schaltparameter 112 repräsentiert und einem Schaltparameter 112 oder einem Satz von Schaltparametern 112 jeweils ein Betätigungssignal 120 bzw. Steuerdaten zuordnet.

Ein Kupplungsaktuator 42, 64 kann mit einem eingebetteten System 124, beispielsweise einem Mikroprozessor versehen sein, das den jeweiligen Kupplungsaktuator 42, 64 steuert. Sind mehrere eingebettete Systeme 124 vorhanden, so sind diese datenübertragend verbunden. Ein eingebettetes System 124 ist jeweils ausgestaltet, den Aktuatormotor 48 abhängig vom Betätigungssignal 120 bzw. den darin enthaltenen Steuerdaten zu steuern.

Ein eingebettetes System 124 kann in den jeweiligen Kupplungsaktuator 42, 64 baulich integriert oder ein separates, insbesondere auch baulich getrenntes Bauteil sind.

Das wenigstens eine eingebettete System 124 kann als Teil der Steuervorrichtung 108 angesehen werden, also der signaltechnischen Seite des Fahrrad-Schaltgetriebes 4. Die Datenverarbeitungsvorrichtung 104 kann in einer Ausgestaltung von einem oder mehreren eingebetteten System gebildet sein. Beispielsweise können alle eingebetteten Systeme zusammen als die Datenverarbeitungsvorrichtung 104 angesehen werden, die somit keine zentrale Instanz mehr aufweist, sondern als ein vollständig verteiltes System aufgebaut ist.

Im Folgenden ist anhand der Figuren 4 und 5 erläutert, wie mit den Schaltparametern 112 und den Steuerdaten des Betätigungssignals 120 eine Synchronisation der zu betätigenden Kupplungsaktuatoren und eine gleichzeitige Betätigung der für den Gangwechsel zu betätigenden Kupplungsaktuatoren erreicht wird.

Fig. 4 zeigt schematisch die Stellungen der Losräder 30 (links in Fig. 4), 58 (rechts in Fig. 4) relativ zur Steuerwelle 34 zum Zeitpunkt eines Gangwechselsignals 106 durch die Datenverarbeitungsvorrichtung 104. Der durch das Gangwechselsignal 106 angeforderte Gangwechsel erfordert hier beispielhaft das gleichzeitige Schalten eines schaltbaren Freilaufs 36 des ersten Teilgetriebes und eines schaltbaren Freilaufs 58 des zweiten Teilgetriebes 52, also in Fig. 2 der Kupplungen K₂ und K₆. Natürlich kann je nach angefordertem Gangwechsel auch jede andere Kombination der Kupplungen K₁ bis K₃ und K₄ bis K₆ des jeweiligen Teilgetriebes 32, 52 beteiligt sein.

Die Steuerwelle 34 dreht sich mit einer Drehgeschwindigkeit oder Drehzahl 200 (die Begriffe Drehzahl und Drehgeschwindigkeit sind in diesem Text synonym verwendet), die durch den gerade eingelegten Gang des ersten Teilgetriebes 32 bestimmt ist. Die Drehgeschwindigkeit 200 bestimmt sich demnach aus der Drehgeschwindigkeit oder Drehzahl der Tretlagerwelle 20 (Fig. 2, 3) und dem Übersetzungsverhältnis i1, i2 oder i3 der gerade eingelegten Schaltstufe des ersten Teilgetriebes 32, über die das Antriebsmoment geleitet wird. Das einzukuppelnde Losrad 30 rotiert, weil die ihm zugeordnete Kupplung nicht betätigt ist, frei auf der Steuerwelle 34. Die Drehzahl 202 des einzukuppelnden Losrades 30 bestimmt sich daher aus der Drehzahl der Tretlagerwelle 20 und dem Übersetzungsverhältnis, hier beispielsweise i2, der Zahnradpaarung des einzukuppelnden Losrades 30 mit dem damit kämmenden Zahnrad 28, hier der Zahnradpaarung 30b, 28b. Folglich weist die Steuerwelle 34 eine Drehzahl bzw. Drehgeschwindigkeit 200 auf, die sich von der Drehzahl bzw. Drehgeschwindigkeit 202 des einzukuppelnden Losrades 30 des ersten Teilgetriebes unterscheidet.

Innerhalb des ersten Teilgetriebes 32 wird beim Hochschalten in einen höheren Gang die Steuerwelle 34 durch das einzukuppelnde schneller drehende Losrad schlagartig auf höhere Drehzahl gebracht. Innerhalb des ersten Teilgetriebes 32 wird beim Runterschalten in einen niedrigeren Gang die Steuerwelle 34 durch die deaktivierte Kupplung des höheren Ganges schlagartig auf niedrigere Drehzahl des aktivierten Losrades gebracht. Innerhalb des zweiten Teilgetriebes 32 haben die Kupplungen K4 bis K6 keinen Einfluss auf die Drehzahl der Steuerwelle 34, sondern ausschließlich auf die Drehzahl der Losräder 54a, 54b und 54c.

In Fig. 4 ist rechts die entsprechende Situation beim zweiten Teilgetriebe 52 dargestellt, bei dem für den Gangwechsel die Kupplung K₆ eingekuppelt werden muss, so dass der Momentenfluss nach dem Gangwechsel über die Zahnradpaarung i6, also die Zahnradpaarung 54c, 56c laufen soll.

Da die Steuerwelle 34 bei dem hier beschriebenen Ausführungsbeispiel durchgängig ist, weist sie im zweiten Teilgetriebe 52 dieselbe Drehzahl bzw. Drehgeschwindigkeit 200 wie im ersten Teilgetriebe auf. Die Drehgeschwindigkeit 204 des für den Gangwechsel einzukuppelnden Losrades 54 des zweiten Teilgetriebes 52 unterscheidet sich jedoch von der Drehzahl bzw. Drehgeschwindigkeit 202. Die Drehzahl 204 des einzukuppelnden Losrades 54 des zweiten Teilgetriebes 52 ist durch die Drehzahl der Abtriebswelle 60 und das Übersetzungsverhältnis der Zahnradpaarung zwischen dem eingekuppelten Losrad 54 und dem damit kämmenden Abtriebszahnrad 56 des gerade eingelegten Ganges bestimmt.

Die Drehzahl und Winkellage der Steuerwelle 34 lässt sich von der Datenverarbeitungsvorrichtung 104 anhand der von dem Sensorsystem 114 erzeugten Schaltparameter 112 ermitteln. Die Position der Kupplungsverzahnung 38 lässt sich anhand der von den Sensorsystemen 24, 116 erzeugten Schaltparameter 112 ermitteln.

Ist die Steuerwelle 34 geteilt, so kann die Steuerwelle des ersten Teilgetriebes 32 eine andere Drehzahl und Winkellage aufweisen als die Steuerwelle des zweiten Teilgetriebes 52. An dem anhand der Fig. 4 erläuterten Prinzip ändert sich dadurch jedoch nichts, solange die Drehzahl und Winkellage der beiden Steuerwellen gemessen und/oder berechnet werden können.

Aus den Schaltparametern 112 lässt sich nach alledem die relative momentane Position der Steuerwelle 34 und damit der wenigstens einen Freilaufklinke 40 zu der Kupplungsverzahnung 38 für sämtliche Losräder 30, 54 berechnen.

Wie aus dem Vergleich der Fig. 4 links und der Fig. 4 rechts hervorgeht, sind nicht nur die Drehzahlen 202 und 204 und somit die relativen Drehgeschwindigkeiten zwischen der Steuerwelle 200 und den Losrädern 30, 54 bei allen Losrädern 30, 54 verschieden, auch die momentane Lage der Freilaufklinken 40 relativ zu der Kupplungsverzahnung 38 ist bei jedem Losrad 30, 58 verschieden. Dies bedeutet, dass die beiden bei einem Gangwechsel eigentlich gleichzeitig zu betätigenden Kupplungen 36, 58 zu unterschiedlichen Zeitpunkten einkuppeln würden, wenn die Freilaufklinken der beiden Kupplungen das exakt gleiche Ansprechverhalten aufweisen würden, also innerhalb der gleichen Zeitspanne vom radial vollständig eingefahrenen in den radial vollständig ausgefahrenen Zustand bewegt würden.

Im ersten Teilgetriebe 32 legt die wenigstens eine Freilaufklinke 40 der dem einzukuppelnden Losrad 30b zugeordneten Kupplung K₂ ausgehend von ihrer Position zu dem Zeitpunkt, zu dem die Datenverarbeitungsvorrichtung 104 das Gangwechselsignal 106 empfängt, einen Einrückweg 206 zurück, bis sie vollständig ausgefahren ist und mit dem nächsten Zahn der Kupplungsverzahnung 38 vollständig in Eingriff gelangt bzw. eingerückt ist. Der Einrückweg 206 wird im Koordinatensystem der Steuerwelle 34 mit der Differenzgeschwindigkeit zwischen der Drehgeschwindigkeit 200 und der Drehgeschwindigkeit 202 zurückgelegt und bestimmt damit die Zeit, innerhalb der die Kupplung K2 vollständig eingekuppelt werden kann. Diese Zeit kann von der Datenverarbeitungsvorrichtung 104 anhand der Schaltparameter 112 berechnet werden. Die Drehzahlen oder Drehgeschwindigkeiten können auch mittels zeitlicher Ableitung der Winkellage von der Datenverarbeitungsvorrichtung 104 berechnet werden.

Die Situation beim zweiten Schaltgetriebe 52 ist analog. Hier muss die wenigstens eine Freilaufklinke 40 der dem Losrad 54c zugeordneten, zu schaltenden Kupplung K₆ einen Einrückweg 208 zurücklegen, bis sie vollständig ausgefahren und eingekuppelt ist und die Antriebsleistung von der Steuerwelle 34 an das Losrad 54c übertragen kann. Die Zeit, innerhalb der der Einrückweg 208 von der wenigstens einen Freilaufklinke 40 zurückgelegt wird, berechnet sich aus der Differenz der Drehzahlen 200 und 204. Auch diese Zeit kann von der Datenverarbeitungsvorrichtung 104 anhand der Schaltparameter 112 berechnet werden. Alle diese Messdaten können als Schaltparameter 112 von der Datenverarbeitungsvorrichtung 104 empfangen werden. Die Drehzahlen oder Drehgeschwindigkeiten können auch mittels zeitlicher Ableitung der Winkellage von der Datenverarbeitungsvorrichtung 104 berechnet werden.

In der den Einrückwegen 206, 208 entsprechenden Zeit muss der Kupplungsaktuator 42, 64 die jeweilige wenigstens eine Freilaufklinke 40 der beiden zu betätigenden Kupplungen K₂, K₆ vollständig ausfahren, also in eine vollständige Überlappung mit der Kupplungsverzahnung 38 gebracht haben. Die Freilaufklinken 40 müssen also innerhalb dieser Zeit eine vollständige Einkuppelbewegung 210 ausführen, damit sie möglichst vollständig in Eingriff mit der Kupplungsverzahnung 38 gelangen können. Die Einkuppelbewegung 210 der Freilaufklinke wird durch die Schaltbewegung 39, 72, des jeweiligen Kupplungsaktuators 42, 64 erzeugt und bestimmt. Der jeweilige Kupplungsaktuator 42, 64 kann zwischengeschaltete mechanische Elemente aufweisen, wie beispielsweise Nocken (in Fig. 4 dargestellt), Kulissenführungen oder Hebel, die die Schaltbewegung 49, 73 auf die wenigstens eine Freilaufklinke 40 übertragen.

Die Zeit zum vollständigen Ausfahren der Schaltklinke entspricht einer Schaltzeit. Die Schaltzeit kann abhängig sein von der Temperatur des Fahrrad-Schaltgetriebes und/oder dem durch das Schaltgetriebe geleiteten Moment sowie von Fertigungstoleranzen. Sie kann von der Datenverarbeitungsvorrichtung 104 abhängig von den momentanen Schaltparametern berechnet werden.

In Fig. 4 reicht beispielsweise bei der rechts dargestellten Situation aufgrund des kurzen Einrückweges 208 die zur Verfügung stehende Zeit zur Ausführung der Einkuppelbewegung 210 nicht aus, um die Freilaufklinke 40 mit dem nächsten Zahn der Kupplungsverzahnung 38 überhaupt oder vollständig in Eingriff zu bringen. Die Freilaufklinke 40 könnte aufgrund des kurzen Einrückweges 208 beispielsweise nur unvollständig ausfahren und im unvollständig ausgefahrenen Zustand in Eingriff mit der Kupplungsverzahnung 38 gelangen. Ein vollständiger Kupplungseingriff wäre nur mit dem übernächsten Zahn der Kupplungsverzahnung 38, nach Überstreichen des Weges 212 möglich.

Im Speicher der Datenverarbeitungsvorrichtung 104 kann die Schaltzeit hinterlegt sein, also die Zeitspanne, die zur vollständigen Ausführung der Schaltbewegung 49, 73bzw. der Einkuppelbewegung 210 notwendig ist. Die Schaltzeiten können für jeden Kupplungsaktuator 42, 64 oder für jede Kupplung 30, 58 einzeln gespeichert sein. Alternativ kann auch eine einzige Schaltzeit für alle Kupplungsaktuatoren hinterlegt sein. Die Schaltzeit kann durch Kalibrierung einfach festgestellt werden.

Die Datenverarbeitungsvorrichtung 104 kann anhand der hinterlegten Zeitspanne berechnen, ob innerhalb des Einrückweges 206, 208 zum bei Empfang des Gangwechselsignals 106 nächstkommenden Zahn der Kupplungsverzahnung 38 in Anbetracht der Drehzahlen 200 und 204 ein vollständiges Ausfahren der Freilaufklinke 40 möglich ist. Ist die zur Verfügung stehende Zeit beispielsweise kleiner als die Schaltzeit für den betreffenden Kupplungsaktuator oder die jeweilige Kupplung, in Fig. 4 die Kupplung K₆, wird die Einkuppelbewegung 210 erst ausgeführt, wenn der nächstkommende Zahn der Kupplungsverzahnung 38 an der Freilaufklinke 40 vorbeibewegt ist.

Die Datenverarbeitungsvorrichtung 104 ist ausgestaltet, das Betätigungssignal an den anderen zu betätigenden Kupplungsaktuator so auszugeben, dass die Freilaufklinke 40 der anderen zu betätigenden Kupplung, hier K₂, unter Berücksichtigung des dortigen Einrückweges 206 und der Drehzahlen 200, 202 betätigt wird und ein vollständiger Eingriff beider zu betätigender Kupplungen K₂ und K₆ mit minimalem Zeitabstand sichergestellt ist.

Um die Kupplungsaktuatoren 42, 64 zu betätigen, gibt die Datenverarbeitungsvorrichtung 104 das Betätigungssignal 120 (Fig. 1) aus. Das Betätigungssignal 120 enthält Steuerdaten, die repräsentativ sind für einen zeitlichen Abstand zwischen der Betätigung des ersten Kupplungsaktuators 42 und der Betätigung des zweiten Kupplungsaktuators 64 und/oder eine Schaltgeschwindigkeit des ersten Kupplungsaktuators 42 und eine Schaltgeschwindigkeit des Kupplungsaktuators 64.

Der zeitliche Abstand zwischen der Betätigung des ersten Kupplungsaktuators 42 und des zweiten Kupplungsaktuators 64 kann wie oben beschrieben von dem zur Verfügung stehenden Einrückweg 206, 208, 212 abhängen. In der in Fig. 4 dargestellten Situation sollte beispielsweise die Kupplung K₂ vor der Kupplung K₆ geschaltet werden, da bei der Kupplung K₆ erst die Passage des nächsten Zahnes der Kupplungsverzahnung 38 abgewartet werden sollte.

Um die Betätigung der beiden zu schaltenden Kupplungen im vorgegebenen zeitlichen Abstand sicherzustellen, kann das Betätigungssignal zwei Komponenten enthalten, die in diesem zeitlichen Abstand ausgegeben werden. Die erste Komponente wird an die erste zu schaltende Kupplung, in Fig. 4 ist dies K₂, die zweite Komponente an die zweite zu schaltende Kupplung, hier K₆, ausgegeben. Die beiden Komponenten können bei Empfang durch den jeweiligen Kupplungsaktuator unmittelbar dessen Betätigung auslösen. Bei dieser Ausgestaltung sind die für den zeitlichen Abstand der Betätigung der Kupplungsaktuatoren repräsentativen Steuerdaten im zeitlichen Abstand der beiden Komponenten des Betätigungssignals 120 enthalten. In dieser Ausgestaltung kann das Betätigungssignal als ein einfaches analoges Signal ausgegeben werden.

Alternativ kann das Betätigungssignal 120 Steuerdaten enthalten, die den jeweiligen absoluten Zeitpunkt der Ausführung der Schaltbewegung 49, 73 durch den zu betätigenden Kupplungsaktuator repräsentieren. In diesem Fall kann das Betätigungssignal digital sein und für jeden Kupplungsaktuator einen andere Schaltzeitpunkt enthalten. Ein solcher Schaltzeitpunkt kann beispielsweise die Anzahl der zu verstreichenden Bustakte einer datenübertragenden Verbindung zwischen der Datenverarbeitungseinrichtung 104 und den Kupplungsaktuatoren 42, 64 repräsentieren.

In einer Ausgestaltung kann jedes eingebettete System 124 eine eigene ständig laufende Uhr beinhalten . Die einzelnen Uhren sind bevorzugt synchronisiert. Die Datenverarbeitungsvorrichtung 104 kann ausgestaltet sein, für jeden oder zumindest für jeden an einem Gangwechsel beteiligten Kupplungsaktuator jeweils den wenigstens einen nächsten, in der Zukunft liegenden Zeitpunkt zu berechnen, zu dem dieser die zu betätigende Kupplung schalten muss und/oder zu dem die von dem Kupplungsaktuator zu betätigende Kupplung eingekuppelt sein muss, damit das Fahrrad-Schaltgetriebe zeitgleich und mit minimalem Leertritt die Schaltstufen schaltet. Dieser wenigstens eine Zeitpunkt kann als Steuerparameter durch die Datenverarbeitungsvorrichtung 104 auch ständig aktualisiert für alle Kupplungsaktuatoren als Information auf einen Bus gelegt und von den eingebetteten Systemen der Kupplungsaktuatoren empfangen werden. Auf diese Weise ist jedes der eingebetteten Systeme sofort für einen beliebigen Gangwechsel bereit. Diese Vorgehensweise ist schneller als eine Berechnung der relevanten Zeitpunkte erst nach der manuellen oder automatischen Erzeugung des Gangwechselsignals.

Alternativ oder kumulativ kann durch eine Steuerung der einem Kupplungsaktuator 42, 64 zugeführten elektrischen Leistung die Geschwindigkeit der Schaltbewegung 49, 73 verändert werden. Steht für einen vollständigen Eingriff einer Freilaufklinke 40 eines bei dem Gangwechsel in den Leistungsfluss zu schaltenden Losrades weniger Zeit zur Verfügung als für die Schaltbewegung 49, 73 des anderen in den Leistungsfluss zu schaltenden Losrades, so kann die elektrische Leistung, die dem die Freilaufklinke des eines Losrades betätigenden einen Kupplungsaktuator zugeführt wird, gegenüber der dem anderen Kupplungsaktuator zugeführten elektrischen Leistung erhöht werden, so dass sich die Schaltgeschwindigkeit der einen Freilaufklinke erhöht. Ob zur Erhöhung der Schaltgeschwindigkeit der Strom und/oder die Spannung und/oder die Frequenz erhöht wird, ist hierbei eine Frage der Ausgestaltung des Kupplungsaktuators.

Neben den oben bereits erwähnten Schaltparametern 112 können weitere Schaltparameter 112 berücksichtigt werden, um die synchrone Betätigung der Kupplungen K₁ und K₂ noch präziser auszugestalten. Beispielsweise kann bei niedrigen Temperaturen die Schaltbewegung 49, 73 langsamer ablaufen als bei hohen Temperaturen. Der vom Sensorsystem 118 gelieferte, für die Temperatur des Fahrrad-Schaltgetriebes 4 repräsentative Schaltparameter 112 kann in einer Ausgestaltung von der Datenverarbeitungsvorrichtung 104 bei der Berechnung der zur Ausführung der Schaltbewegung notwendigen Schaltzeit berücksichtigt werden. Die Temperaturabhängigkeit der Schaltbewegung 49, 73 kann experimentell bestimmt werden. Die Abhängigkeit kann in der Datenverarbeitungsvorrichtung in der Übertragungsfunktion 123, beispielsweise einer Lookup-Tabelle gespeichert sein.

Ferner können aufgrund der durch das Fahrrad-Schaltgetriebe 4 geleiteten Antriebsleistung, insbesondere aufgrund des daraus resultierenden Drehmoments lokale Verformungen an der Tretlagerwelle 20, der Steuerwelle 34 und/oder den Kupplungen 36, 58 auftreten, die ebenfalls kompensiert werden können. Das an der Steuerwelle 34 anliegende Drehmoment kann beispielsweise durch das Sensorsystem 114 als Schaltparameter 112 erfasst werden. Alternativ kann das Drehmoment an der Steuerwelle 34 auch mittels des Sensorsystems 24 und/oder des Sensorsystems 116 berechnet werden, indem die Übersetzungen i1 bis i6 berücksichtigt werden. Der Einfluss des Antriebsmoments auf den Schaltvorgang kann gegebenenfalls zusammen mit anderen Parametern wie der Temperatur, der Einbaulage des Antriebssystems in der in der Datenverarbeitungsvorrichtung gespeicherten Übertragungsfunktion gespeichert sein.

Durch den pulsierenden Drehmomentverlauf eines Radfahrers während einer Pedalumdrehung kommt es bei allen kraftübertragenden Teilen zu einer sich mit dem Drehmomentverlauf ständig wiederholenden Be- und Entlastung bzw. Ver- und Entspannung des Fahrrad-Schaltgetriebes bzw. der das Drehmoment übertragenden Teile des Schaltgetriebes. Der Drehmomentverlauf ist von Radfahrer zu Radfahrer unterschiedlich. So kann beispielsweise ein sehr erfahrener Radfahrer mit einem "runden" Tritt trotz hoher Tretleistung eine geringere Amplitude im Drehmomentverlauf aufweisen als ein schlechter trainierter und weniger erfahrener Radfahrer. Aus diesem Grund kann es von Vorteil sein, wenn die Datenverarbeitungsvorrichtung ausgestaltet ist, das Betätigungssignal bzw. die Steuerparameter in Abhängigkeit vom Drehmomentverlauf über eine Pedalumdrehung und gegebenenfalls zusätzlich der Trittfrequenz zu bestimmen bzw. auszugeben. Die Datenverarbeitungsvorrichtung kann ausgestaltet sein, den Drehmomentverlauf aus einem oder mehreren momentanen Drehmomentverläufen beispielsweise durch zeitliche Mittelung für jeweils bestimmte Pedalstellungen über eine vorbestimmte Anzahl von Pedalumdrehungen, zu berechnen. Der Drehmomentverlauf kann aber auch in der Datenverarbeitungsvorrichtung nach einmaliger Ermittlung gespeichert sein, beispielsweise in der Übertragungsfunktion 123. So kann die Datenverarbeitungsvorrichtung ausgestaltet sein, das Betätigungssignal an einer vorbestimmten Pedalstellung auszugeben.

Mit Hilfe der Sensorsysteme 46 und 68 lässt sich ein geschlossener Regelkreis während eines Gangwechsels implementieren. So kann laufend die Position wenigstens eines Kupplungsaktuators 42, 64 überwacht werden und anhand von Schaltparametern wie beispielsweise der Winkelposition des entsprechenden Losrades und der Steuerwelle sowie deren Drehzahlen die zur Ausführung der noch verbleibenden Einkuppelbewegung 210 benötigte Zeit berechnet werden. Das Betätigungssignal 120 kann verändert werden, beispielsweise indem die die Schaltgeschwindigkeit repräsentierenden Steuerdaten in Richtung einer höheren Schaltgeschwindigkeit verändert werden.

Die Routine 122 kann anhand der im Schaltparameter 112 repräsentierten Position des Kupplungsaktuators 42, 64 eine Lageregelung vorzugsweise eines jeden Kupplungsaktuators 42, 64 durchführen, beispielsweise, indem nacheinander und zu bestimmten Zeitpunkten innerhalb der zum Einkuppeln zur Verfügung stehenden Zeit verschiedene Positionen entlang der Schaltbewegung 49, 73 bzw. Einkuppelbewegung 210 angefahren werden. Alternativ oder kumulativ kann die Routine 122 eine Geschwindigkeitsregelung vorzugsweise bei jedem Kupplungsaktuator 42, 64 durchführen, bei der die Schaltgeschwindigkeit, also die Geschwindigkeit, mit der sich die wenigstens eine Freilaufklinke bewegt, geregelt wird, beispielsweise auf einen Geschwindigkeitswert, der die Schaltbewegung 49, 73 bei beiden Kupplungsaktuatoren 42, 64 zum selben Zeitpunkt enden lässt. Schließlich kann alternativ oder kumulativ die Routine 122 bei jedem Kupplungsaktuator 42, 64 eine Kraftregelung durchführen, also die von einem jeden Kupplungsaktuator 42, 64 aufgebrachte Antriebskraft und damit die Beschleunigung der wenigstens einen Freilaufklinke 40 regeln.

Bei der Ausführungsform der Fig. 5 ist die Kupplungsverzahnung 38 als eine Axialverzahnung ausgeführt. Die Freilaufklinken 40 sind hier beispielsweise Teil einer Zahnscheibe mit einer zu der axialen Kupplungsverzahnung 38 komplementären Axialverzahnung. Die Drehachse, um die sich die Losräder 30, 54 drehen und entlang der sich die Steuerwelle 34 (nicht gezeigt) erstreckt, ist mit dem Bezugszeichen 214 gekennzeichnet. Die Einkuppelbewegung 210 verläuft parallel zur Drehachse 214.

Die mit Bezug auf die Ausführungsform der Fig. 4 erläuterten Prinzipien finden auch bei der Ausführungsform der Fig. 5 Anwendung. Bei einem Gangwechsel ergibt sich die gleiche Situation wie bei Fig. 4: Die Einkuppelbewegung 210 muss innerhalb der Zeit, in der der Einrückweg 206, 208 zurückgelegt wird, ausgeführt werden. Wie bei dem Ausführungsbeispiel der Fig. 4 bestimmt sich die dafür zur Verfügung stehende Zeit aus der Differenz der Drehzahlen 200 und 202 bzw. 200 und 204.

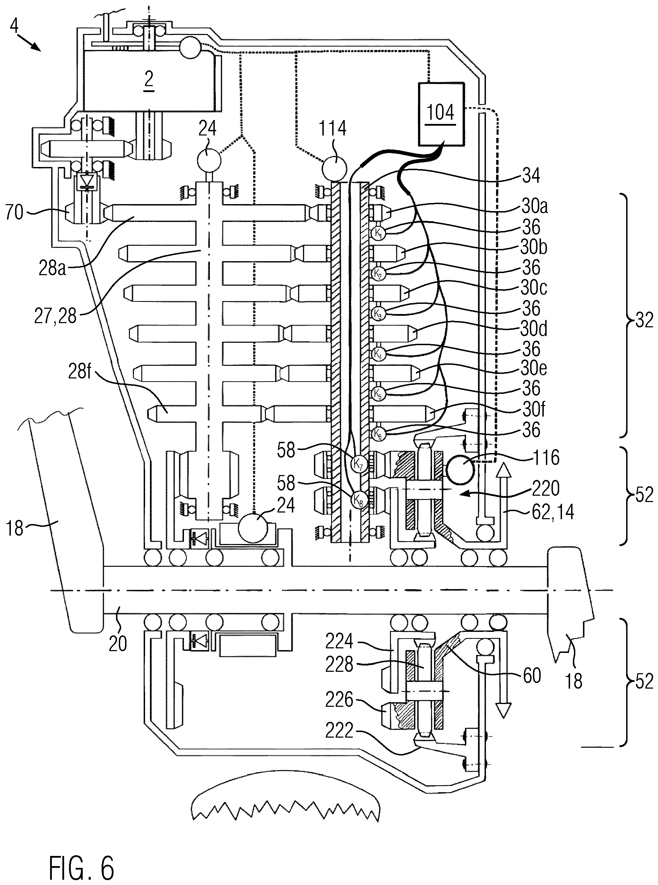

In Fig. 6 ist eine Variante eines Fahrrad-Schaltgetriebes gezeigt, das sich ebenfalls im Tretlagerbereich des Fahrrads 1 (Fig. 1) befindet. Bei dem Fahrrad-Schaltgetriebe 4 der Fig. 6 verlaufen die Antriebswelle 27 und die Steuerwelle 34 senkrecht zur Tretlagerwelle 20 und nicht parallel zur Tretlagerwelle 20 wie bei den Ausführungsbeispielen der Fig. 2 und 3.

Ein weiterer Unterschied zu den vorhergehend beschriebenen Ausführungsbeispielen besteht darin, dass das erste Teilgetriebe 32 sechs Schaltstufen aufweist, die über die entsprechenden Kupplungen K₁ bis K₆ zu schalten sind. Die Kupplungen K₁ bis K₆ sind bevorzugt als schaltbare Freiläufe 36 ausgestaltet. Die Kupplungen K₁ bis K₆ können durch eine innerhalb oder außerhalb der Steuerwelle 34 angeordnete Mechanik angesteuert werden. In diesem Fall ist ein Kupplungsaktuator 42 zur Betätigung der Kupplungen K₁ bis K₆ vorgesehen. Alternativ können die Kupplungen K₁ bis K₆ auch direkt von der Datenverarbeitungsvorrichtung 104 angesteuert werden, wenn jede Kupplung K₁ bis K₆ ihren eigenen Kupplungsaktuator aufweist.

Das zweite Teilgetriebe 52 ist bei der Ausführungsform der Fig. 6 als ein Planetengetriebe 220 ausgestaltet, das die Steuerwelle 34 mit der Abtriebswelle 60 verbindet. Lediglich beispielhaft ist das Hohlrad 222 gehäusefest, während jeweils das Sonnenrad 224 und der Planetenträger 226 mit den Planetenrädern 228 über die Kupplungen K₇ und K₈ relativ zur Steuerwelle 34 festgelegt werden können.

Die Kupplungen K₁ bis K₆ können beispielsweise wie in Fig. 5 dargestellt axial ein- und auskuppelnd ausgestaltet sein, während die Kupplungen K₇ und K₈ wie in Fig. 4 dargestellt radial ein- und auskuppelnd ausgestaltet sein können. Jede andere Kombination ist natürlich ebenso möglich.

Lediglich beispielhaft fehlen in Fig. 6 die Sensorsysteme 46 und 68, so dass eine Regelung des Gangwechsels nicht möglich ist, sofern die einzelnen Kupplungsaktuatoren K₁ bis K₈ keine Schaltparameter über die Schaltposition innerhalb ihrer jeweiligen Schaltbewegung 49, 73 und/oder die Schaltgeschwindigkeit zur Verfügung stellen, also die Sensorsysteme 46 und 68 in die Kupplungsaktuatoren integriert sein..

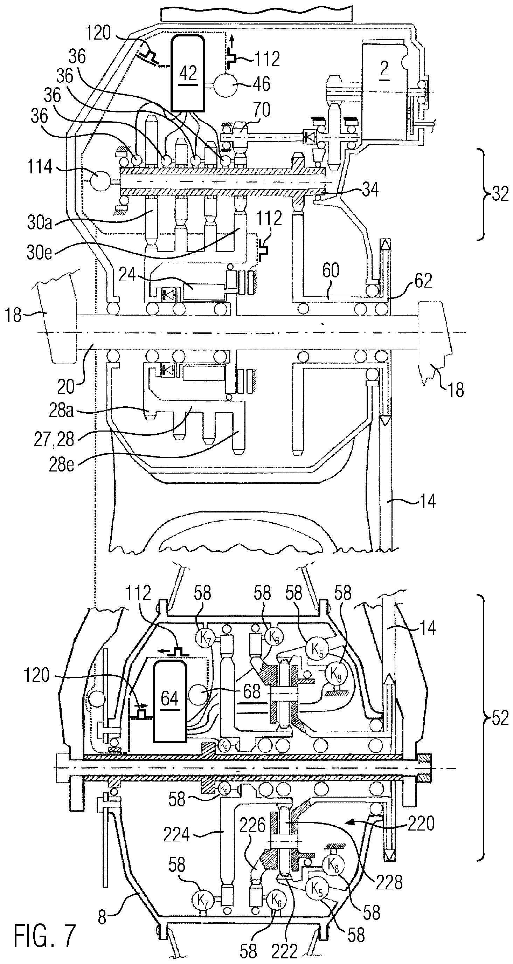

In Fig. 7 ist gezeigt, dass das zweite Teilgetriebe, das hier ebenfalls als ein Planetengetriebe 220 ausgestaltet ist, in der Hinterradnabe 8 eingebaut, also räumlich getrennt vom ersten Teilgetriebe 32 angeordnet sein kann.

Das erste Teilgetriebe 32 weist vier Schaltstufen auf, die über Kupplungen K₁ bis K₄ geschaltet werden. Auch hier sind die Kupplungen K₁ bis K₄ vorzugsweise als schaltbare radiale oder axiale Freiläufe 36 ausgestaltet. Im zweiten Teilgetriebe sind Kupplungen K₅ bis K₉ vorgesehen. Die Antriebsleistung vom ersten Teilgetriebe wird an den Planetenträger 226 übertragen, der über die Kupplung K₆ mit der Hinterradnabe 8 in drehstarre Verbindung gebracht werden kann. Die Kupplung K₇ legt das Sonnenrad 224 bezüglich der Hinterradnabe 8 fest, während die Kupplung K₉ das Sonnenrad gehäusefest festlegt. Die Kupplungen K₇ und K₉ werden alternativ geschaltet. Die Kupplung K₅ legt das Hohlrad relativ zur Hinterradnabe fest, während die Kupplung K₈ das Hohlrad mit dem Planetenträger verbindet.

Die Kupplungen K₅ bis K₉ sind alle ebenfalls bevorzugt als schaltbare Freiläufe 58 ausgestaltet. Gerade bei einem Planetengetriebe mit einer Vielzahl von Kupplungen, wie es beispielhaft in Fig. 7 dargestellt ist, ist eine exakte Synchronisation des Ein- und Auskupplungsvorgangs der an einem Schaltwechsel beteiligten Kupplungen wichtig, damit keine Zwischengänge eingelegt werden oder der Radfahrer ins Leere tritt.

Beim Hochschalten in Richtung größerer Übersetzungen ist der einzulegende Gang dann eingelegt, wenn die Kupplungen des einzulegenden Ganges aktiviert sind, im vorliegenden Beispiel also die Kupplungen K₂ und K₆. Beim Herunterschalten ist der einzulegende kleinere Gang erst dann eingelegt, wenn die Kupplungen des vorher eingelegten höheren Ganges deaktiviert sind. Die noch geschalteten, aber zu lösenden Kupplungen müssen meist unter Last deaktiviert werden, was meist eine längere Schaltzeit und eine höhere elektrische Leistung im verantwortlichen Kupplungsaktuator erfordert als das deaktivieren einer nicht unter Last stehenden Kupplung. Aus diesem Grund sollte ein Schaltparameter repräsentativ für die Schaltrichtung und/oder den gerade eingelegten und den einzulegenden Gang sein. In beiden Fällen werden die Kupplungen des zuvor eingelegten Ganges erst deaktiviert, wenn die Kupplungen des einzulegenden Ganges eingelegt sind.

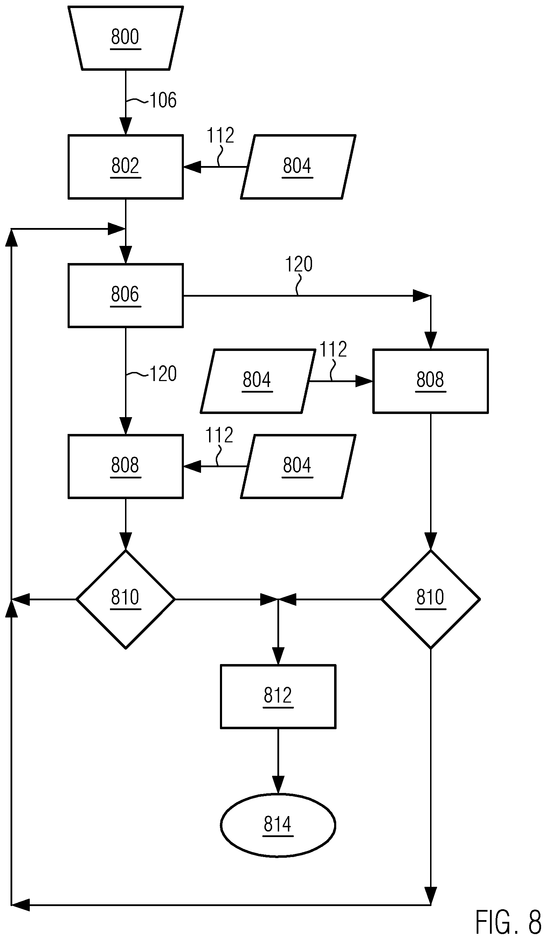

Fig. 8 gibt einen Überblick über das Verfahren, um den Gangwechsel direkt von einem in einen anderen Gang ohne Einlegen eines Zwischenganges bzw. Durchtreten zu ermöglichen.

Zunächst wird in Schritt 800 vom Radfahrer das Gangwechselsignal 106 erzeugt, beispielsweise indem er das Betätigungselement 110 betätigt. Das Gangwechselsignal 106 repräsentiert den durchzuführenden Gangwechsel. Der Gangwechsel muss nicht von dem einen Gang in den nächsthöheren oder nächstniedrigeren Gang erfolgen, sondern kann auch mehrere Gänge überspringen, so dass von dem einen Gang direkt in einen mehrere Gänge entfernten anderen Gang hoch- oder runtergeschaltet werden kann.

Die oben beschriebenen Sensorsysteme überwachen die jeweiligen Messgrößen, zu deren Messung sie ausgebildet sind, und erzeugen in Schritt 804 die Schaltparameter 112, die diese Messgrößen repräsentieren. Der Schritt 804 kann abhängig vom Gangwechselsignal 106 oder unabhängig, zum Beispiel zeitlich getaktet und/oder als ständig laufender Hintergrundprozess, erfolgen .

In Schritt 802 werden die Schaltparameter eingelesen, empfangen oder abgerufen, beispielsweise durch die Datenverarbeitungsvorrichtung 104.

In Schritt 806 werden die Steuerparameter für die beiden zu schaltenden Kupplungen abhängig von den Schaltparametern 112 wie oben beschrieben berechnet. Wenigstens ein Steuerparameter wird berechnet, der repräsentativ ist für eine Zeitdifferenz zwischen der Betätigung der einen und der Betätigung der anderen für den Gangwechsel notwendigen Kupplungsaktuatoren und/oder die Schaltgeschwindigkeit, mit der die zu betätigenden Kupplungsaktuatoren betrieben werden. Die Steuerdaten sind Teil des Betätigungssignals, das an die wenigstens zwei zu schaltenden Kupplungen ausgegeben wird.

Alternativ können Steuerparameter berechnet werden, die repräsentativ sind für die unterschiedlichen in der Zukunft liegenden Zeitpunkte, an denen die für den Gangwechsel notwendigen Kupplungsaktuatoren in Bewegung gesetzt werden müssen. Diese Zeitpunkte können beispielsweise abhängig von der Pedalstellung sein. So kann es von Vorteil sein, wenn die zu lösenden Kupplungen an den Totpunkten der Pedalstellung-die Pedale stehen senkrecht - gelöst werden. Je nach der Schaltrichtung kann der Zeitpunkt der Totpunkte der Pedalstellung die Zeitpunkte der Betätigung des ersten und des mindestens zweiten Kupplungsaktuators bestimmen.

Nach der Ausgabe des Betätigungssignals 120 werden in Schritt 804 die Schaltparameter 112, die repräsentativ sind für den Zustand der beim angeforderten Gangwechsel zu betätigenden Kupplungen aufgenommen, wie beispielsweise die Position, aufgenommene Leistung, Schaltgeschwindigkeit der Kupplungsaktuatoren sowie die Positionen der Steuerwelle 34 und der Losräder 30, 58. Dies erfolgt für jeden Kupplungsaktuator separat. Im Schritt 808 werden die Schaltparameter 112 verarbeitet. Beispielsweise wird die Position, Drehzahl und/oder Leistung der Kupplungsaktuatoren jeweils mit einer vorbestimmten Position, Drehzahl und/oder Leistung verglichen.

Alternativ oder kumulativ kann ein Vergleich der aktuellen Uhrzeit mit der Uhrzeit, die für den Start des Kupplungsvorgangs vorausberechnet wurde, durchgeführt werden. Der erste und der zweite Kupplungsaktuator werden betätigt, wenn die aktuelle Uhrzeit mit der vorausberechneten Uhrzeit übereinstimmt.

Alternativ oder kumulativ können die Drehzahlen der Losräder und der wenigstens Freilaufklinke, also die Drehzahlen der Antriebsseite und der Abtriebsseite der für den Gangwechsel zu betätigenden Kupplungen miteinander verglichen werden.

Im Schritt 810 wird abgefragt, ob die für den einzulegenden Gang zu betätigenden Kupplungen betätigt sind, die Kupplungsaktuatoren also nicht weiter betätigt werden müssen. Ist dies nicht der Fall, so wird im Schritt 806 das Betätigungssignal weiter ausgegeben, oder anhand der soeben erfassten Schaltparameter neu berechnet und an dann die zu betätigenden Kupplungsaktuatoren ausgegeben.

Beispielsweise kann eine zu betätigende Kupplung dann als betätigt bzw. eingekuppelt gelten, wenn der für die momentane Stellung des Kupplungsaktuators repräsentative Schaltparameter 112 einen für einen vollständig zurückgelegten Schaltweg 210 repräsentativen Weg annimmt. Alternativ oder kumulativ kann eine zu betätigende Kupplung dann als betätigt gelten, wenn die Drehzahl ihrer Antriebsseite gleich der Drehzahl ihrer Abtriebsseite ist.

Wird im Schritt 810 festgestellt, dass eine Kupplung betätigt und damit eingekuppelt ist, so werden die Kupplungsaktuatoren des gerade eingelegten Ganges deaktiviert. Es bleiben somit nur die für den einzulegenden Gang zu betätigenden Kupplungsaktuatoren aktiviert. Der einzulegende Gang ist somit eingelegt und das Programm kann mit Schritt 814 enden.

In der in Fig. 8 dargestellten Ausgestaltung wird der Gangwechsel geregelt, enthält also eine Regelschleife. Bei einer einfacheren Steuerung des Gangwechsels kann auf die Schritte 808 und 810 verzichtet werden. Dann folgt auf Schritt 806 bzw. 808 der Schritt 812.

Im Schritt 812 werden die betätigten Kupplungen des Ganges, der zum Zeitpunkt des Empfangs des Gangwechselsignals 106 eingelegt war, gelöst und der Gangwechselvorgang ist beendet.

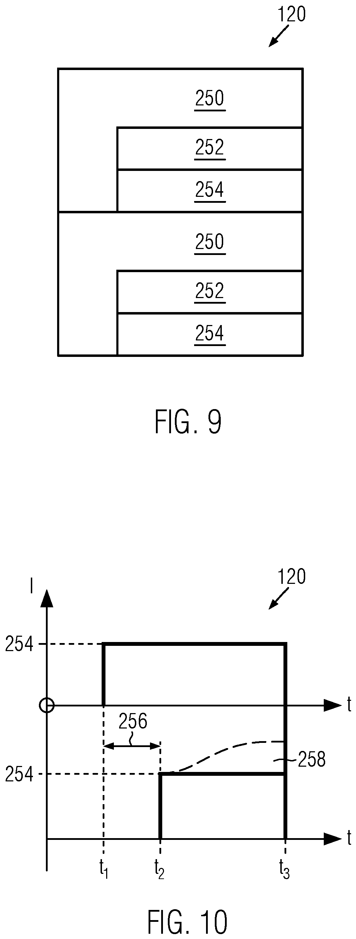

Fig. 9 zeigt beispielhaft ein digitales Betätigungssignal 120, in dem Steuerdaten enthalten sind. Beispielsweise können die Steuerdaten 250 den Kupplungsaktuator 42, 64, identifizieren für den die nachfolgenden Steuerdaten 252, 254 bestimmt sind. Die Steuerdaten 252 können den Zeitpunkt bestimmen, zu dem der jeweilige Kupplungsaktuator 42, 64 die Schaltbewegung beginnt. Die Steuerdaten 254 können repräsentativ sein für die Schaltgeschwindigkeit, also die Geschwindigkeit, mit der der jeweilige Kupplungsaktuator 42, 64 die Schaltbewegung 49, 73 ausführen soll. Alternativ oder kumulativ können Steuerdaten den Zeitpunkt bestimmen, zu dem die Schaltbewegung 49, 73 beendet sein muss. In einem solchen Fall kann der jeweils adressierte Kupplungsaktuator 42, 64 ausgestaltet sein, die Schaltgeschwindigkeit aus den Schaltparametem selbst zu berechnen, beispielsweise mithilfe des in den Kupplungsaktuator integrierten Mikroprozessors. Mithilfe der den jeweiligen Kupplungsaktuator adressierenden Steuerdaten 250 können beliebig viele Kupplungsaktuatoren individuell über beispielsweise ein Bussystem gesteuert werden.

Fig. 10 zeigt beispielhaft ein analoges Betätigungssignal 120 für zwei Kupplungsaktuatoren. Das Betätigungssignal 120 dient hier direkt zur Leistungsübertragung. Die für die Schaltgeschwindigkeit repräsentativen Steuerdaten 254 sind durch den Verlauf der Stromstärke I über die Zeit t vorgegeben. Die für eine Zeitdifferenz zwischen der Betätigung der beiden Kupplungsaktuatoren repräsentativen Steuerdaten 256 sind durch die unterschiedlichen Zeitpunkte t₁ und t₂ dargestellt. Auch bei dieser Ausgestaltung können beliebig viele Kupplungsaktuatoren angesteuert werden.

Der Verlauf 258 des Betätigungssignals 120 auf dem einen Kanal zeigt, wie bei einer Regelung der Schaltbewegung eines Kupplungsaktuators die Schaltgeschwindigkeit durch eine Erhöhung der Stromstärke I erhöht werden kann. Auf diese Weise kann beispielsweise sichergestellt werden, dass alle Kupplungsaktuatoren zum selben Zeitpunkt t₃ eingekuppelt sind.

Bei einem digitalen Betätigungssignal 120 wie in Fig. 9 wird bei einer Regelung ein neues Betätigungssignal mit neuen Steuerdaten 254 an den entsprechenden Kupplungsaktuator geschickt.

### Bezugszeichen

- 1: Fahrrad
- 2: Hilfsmotor
- 4: Fahrrad-Schaltgetriebe
- 6: Tretlager
- 8: Hinterradnabe
- 10: Pedalantrieb
- 12: Hinterrad
- 14: Zugmittel
- 16: Pedal
- 18: Tretkurbel
- 20: Tretlagerwelle
- 22: Akku
- 24: Sensorsystem
- 26: Freilauf
- 27: Antriebswelle
- 28: Zahnradblock
- 28a, 28b, 28c: Antriebszahnrad
- 30: Losräder
- 30a, 30b, 30c: Losrad
- 32: (erstes) Teilgetriebe
- 34: Schaltwelle
- 36: schaltbarer Freilauf (Antriebsseite des Getriebes)
- 38: Kupplungsverzahnung
- 40: Freilaufklinke oder -zahn
- 42: (erster) Kupplungsaktuator
- 44: (erster) Aktuatormotor
- 46: Sensorsystem am ersten Kupplungsaktuator
- 48: (erstes) Aktuatorgetriebe
- 49: Schaltbewegung
- 50: (erstes) Überlagerungsgetriebe
- 52: (zweites) Teilgetriebe
- 54: Losräder des zweiten Teilgetriebes
- 54a, 54b, 54c: Losrad
- 56: Zahnradblock des zweiten Teilgetriebes
- 56a, 56b, 56c: Abtriebszahnrad
- 58: schaltbarer Freilauf (Abtriebsseite)
- 60: Abtriebswelle
- 62: Riemenscheibe oder Kettenblatt
- 64: (zweiter) Kupplungsaktuator
- 66: (zweiter) Aktuatormotor
- 68: Sensorsystem am zweiten Kupplungsaktuator
- 70: (zweites) Aktuatorgetriebe
- 72: (zweites) Überlagerungsgetriebe
- 73: Schaltbewegung
- 74: Hilfsmotor-Antriebszahnrad
- 100: eingelegter Gang
- 102: einzulegender Gang
- 104: Datenverarbeitungsvorrichtung
- 106: Gangwechselsignal
- 108: Steuervorrichtung
- 110: Betätigungselement
- 112: Schaltparameter
- 114: Sensorsystem an der Schaltwelle
- 116: Sensorsystem an der Abtriebswelle
- 118: Sensorsystem zur Temperaturerfassung
- 120: Betätigungssignal
- 122: Routine zur Lage-, Geschwindigkeits- und/oder Kraftregelung
- 123: Übertragungsfunktion
- 124: eingebettetes System
- 200: Drehzahl / Drehgeschwindigkeit der Steuerwelle
- 202: Drehzahl / Drehgeschwindigkeit des einzukuppelnden Losrades des ersten Teilgetriebes
- 204: Drehzahl / Drehgeschwindigkeit des einzukuppelnden Losrades des zweiten Teilgetriebes
- 206: Einrückweg, bis Kupplung K2 einkuppelt
- 208: Einrückweg, bis Kupplung K6 einkuppelt
- 210: Einkuppelbewegung
- 212: Weg des Freilaufzahnes / der Freilaufklinke zum nächsten Zahn der Kupplungsverzahnung
- 214: Drehachse
- 220: Planetengetriebe
- 222: Hohlrad
- 224: Sonnenrad
- 226: Planetenträger
- 228: Planetenrad
- 250,252, 254, 256: Steuerdaten
- 258: Verlauf der Schaltgeschwindigkeit
- F₁, F₂: nicht schaltbare Freiläufe
- I: Stromstärke
- i1, i2, ...: Zahnradpaarungen / Übersetzungsverhältnis
- K1, K2 ...: Kupplungen
- t: Zeit
- t₁, t₂, t₃: Zeitpunkte

## Patentansprüche

1. Datenverarbeitungsvorrichtung (104) zur Steuerung eines Gangwechsels in einem Fahrrad-Schaltgetriebe (4) für ein Fahrrad (1) mit oder ohne Hilfsmotor (2), insbesondere einer Tretlager- und/oder Nabenschaltung, von einem eingelegten Gang (100) direkt in einen anderen, einzulegenden Gang (102) durch automatische Betätigung eines ersten Kupplungsaktuators (42) und mindestens eines zweiten Kupplungsaktuators (64),
wobei die Datenverarbeitungsvorrichtung (104) ausgestaltet ist:
- wenigstens einen Schaltparameter (112) zu empfangen, der repräsentativ ist für einen momentanen Zustand des Fahrrad-Schaltgetriebes (4);
- abhängig von dem wenigstens einen Schaltparameter (112) und einem einen Befehl für einen Gangwechsel repräsentierenden Gangwechselsignal (106) ein Betätigungssignal (120) zur Betätigung des ersten und des zweiten Kupplungsaktuators (42, 64) auszugeben:
- wobei im Betätigungssignal (120) Steuerdaten (250, 252,254, 256) enthalten sind, die repräsentativ sind
= für in der Zukunft liegenden Zeitpunkte, an denen der erste Kupplungsaktuator (42) und/oder der zweite Kupplungsaktuator (64) eine für den Gangwechsel erforderliche Schaltbewegung (49, 73) ausgeführt haben oder ausführen soll, und/oder
= für einen zeitlichen Abstand zwischen der Betätigung des ersten Kupplungsaktuators (42) und der Betätigung des zweiten Kupplungsaktuators (64) und/oder
= für eine Schaltgeschwindigkeit des ersten Kupplungsaktuators (42) und eine Schaltgeschwindigkeit des zweiten Kupplungsaktuators (64).

2. Datenverarbeitungsvorrichtung (104) nach Anspruch 1,
wobei die Datenverarbeitungsvorrichtung (104) ausgestaltet ist,
- wenigstens einen aktuellen Schaltparameter (112) vor oder während des Gangwechsels zu empfangen und
- das Betätigungssignal (120) in Abhängigkeit von dem wenigstens einen empfangenen aktuellen Schaltparameter (112) zu ändern.

3. Datenverarbeitungsvorrichtung (104) nach Anspruch 2,
wobei die Datenverarbeitungsvorrichtung (104) eine Routine (122) zur Kraft-, Lage- und/oder Geschwindigkeitsregelung wenigstens eines Kupplungsaktuators (42, 64) abhängig von dem wenigstens einen Schaltparameter (112) aufweist.

4. Datenverarbeitungsvorrichtung (104) nach einem der Ansprüche 1 bis 3,
wobei der wenigstens eine Schaltparameter (112) in der folgenden Gruppe von Schaltparametern enthalten ist:
- wenigstens einen Schaltparameter (112), der repräsentativ ist für ein momentanes, an einer Getriebewelle (27, 34, 60) des Fahrrad-Schaltgetriebes (4) anliegendes Drehmoment;
- wenigstens einen Schaltparameter (112), der repräsentativ ist für eine momentane Drehzahl einer Getriebewelle (27, 34, 60) des Fahrrad-Schaltgetriebes (4),
- wenigstens einen Schaltparameter (112), der repräsentativ ist für eine aktuelle Winkelstellung einer Getriebewelle (27, 34, 60) des Fahrrad-Schaltgetriebes (4);
- wenigstens einen Schaltparameter (112), der repräsentativ ist für eine durch das Fahrrad-Schaltgetriebe (4) geleitete Antriebsleistung;
- einen Schaltparameter (112), der repräsentativ ist für eine momentane Stellung des ersten Kupplungsaktuators (42) und/oder des zweiten Kupplungsaktuators (64);
- einen Schaltparameter (112), der repräsentativ ist für eine vom ersten Kupplungsaktuator (42) und/oder zweiten Kupplungsaktuator (64) erzeugte Schaltkraft;
- einen Schaltparameter (112), der repräsentativ ist für eine momentane Bewegungsgeschwindigkeit des ersten Kupplungsaktuators (42) und/oder des zweiten Kupplungsaktuators (64);
- ein Schaltparameter (112), der repräsentativ ist für den eingelegten Gang; und
- einen Schaltparameter (112), der repräsentativ ist für eine Temperatur des Fahrrad-Schaltgetriebes (4).

5. Datenverarbeitungsvorrichtung (104) nach einem der Ansprüche 1 bis 4,
wobei das Gangwechselsignal (106) wenigstens einen Gangzahlparameter aus der Gruppe von Gangzahlparameter enthaltend
- einen Gangzahlparameter, der repräsentativ für die Gangzahl des einen Ganges ist, und
- einen Gangzahlparameter, der repräsentativ für die Gangzahl des anderen Ganges ist,
beinhaltet.

6. Datenverarbeitungsvorrichtung (104) nach Anspruch 5,
wobei die Datenverarbeitungsvorrichtung (104) ausgestaltet ist,
- die Schaltrichtung anhand des Gangzahlparameters des einen Ganges und des Gangzahlparameters des anderen Schaltparameters zu ermitteln.

7. Datenverarbeitungsvorrichtung (104) nach einem der Ansprüche 1 bis 6,
wobei die Datenverarbeitungsvorrichtung (104) eine Übertragungsfunktion (123) aufweist, durch die dem wenigstens einen Schaltparameter (112) ein Betätigungssignal (120) zugeordnet ist.

8. Datenverarbeitungsvorrichtung (104) nach einem der Ansprüche 1 bis 7,
wobei die Datenverarbeitungsvorrichtung (104) ausgestaltet ist,
- das Gangwechselsignal zu empfangen und/oder
- abhängig von wenigstens einem Schaltparameter selbst zu erzeugen.

9. Steuervorrichtung (108) zur Steuerung des Gangwechsels eines Fahrrad-Schaltgetriebes (4), insbesondere einer Tretlagerschaltung oder einer Nabenschaltung, für ein Fahrrad mit oder ohne Hilfsmotor,
wobei die Steuervorrichtung (108) aufweist:
- eine Datenverarbeitungsvorrichtung (104) nach einem der Ansprüche 1 bis 8;
- den ersten Kupplungsaktuator (42) und mindestens einen zweiten Kupplungsaktuator (64),
- wobei der erste Kupplungsaktuator (42) und der zweite Kupplungsaktuator (64) mit der Datenverarbeitungsvorrichtung (104) datenübertragend verbindbar und abhängig vom Betätigungssignal (120) betätigbar ausgestaltet sind.

10. Steuervorrichtung (108) nach Anspruch 9,
wobei die Steuervorrichtung (108) aufweist:
- ein für einen Radfahrer zugängliches Betätigungselement (110), das ausgestaltet ist, bei Betätigung durch den Radfahrer das Gangwechselsignal (106) zu erzeugen

11. Steuervorrichtung (108) nach Anspruch 9 oder 10,
wobei die Steuervorrichtung (108) wenigstens ein Sensorsystem (46, 68, 24, 114, 116, 118) zur Erfassung des wenigstens einen Schaltparameters (112) aufweist.

12. Steuervorrichtung (108) nach einem der Ansprüche 9 bis 11,
wobei das wenigstens eine Sensorsystem (46, 68, 24, 114, 116, 118) in der folgenden Gruppe von Sensorsystemen enthalten ist:
- ein Sensorsystem (24, 114, 116), das ausgestaltet ist, ein an einer wenigstens einer Getriebewelle (27, 34, 60) des Fahrrad-Schaltgetriebes (4) anliegendes Drehmoment zu erfassen,
- ein Sensorsystem (24, 114, 116), das ausgestaltet ist, eine Drehzahl wenigstens einer Getriebewelle (27, 34, 60) des Fahrrad-Schaltgetriebes (4) zu erfassen,
- ein Sensorsystem (24, 114, 116), das ausgestaltet ist, eine Winkelstellung wenigstens einer Getriebewelle (27, 34, 60) des Fahrrad-Schaltgetriebes (4) zu erfassen,
- ein Sensorsystem (24, 114, 116), das ausgestaltet ist, eine an wenigstens einer Getriebewelle (27, 34, 60) des Fahrrad-Schaltgetriebes (4) anliegende Antriebsleistung zu erfassen,
- ein Sensorsystem (46, 68), das ausgestaltet ist, eine Position des ersten Kupplungsaktuators (42) und/oder des zweiten Kupplungsaktuators (64) zu erfassen,
- ein Sensorsystem (46, 68), das eine vom ersten Kupplungsaktuator (42) und/oder zweiten Kupplungsaktuator (64) erzeugte Schaltkraft erfasst,
- ein Sensorsystem (46, 68), das eine dem ersten Kupplungsaktuator (42) und/oder zweiten Kupplungsaktuator (64) zugeführte Schaltleistung erfasst,
- ein Sensorsystem (46, 68), das eine Bewegungsgeschwindigkeit des ersten Kupplungsaktuators (42) und/oder des zweiten Kupplungsaktuators (64) erfasst,
- ein Sensorsystem (114), das eine Drehzahl einer Steuerwelle (34) des Fahrrad-Schaltgetriebes (4) erfasst, auf der die von dem ersten und/oder zweiten Kupplungsaktuator (42, 64) betätigbaren Kupplungen (K₁, K₂, K₃, K₄, K₅, K₆) angeordnet sind,
- ein Sensorsystem (114), das eine Winkelstellung der Steuerwelle (114) erfasst,
- ein Sensorsystem (118), das eine Temperatur des Fahrrad-Schaltgetriebes (4) erfasst.

13. Steuervorrichtung (108) nach einem der Ansprüche 9 bis 12,
wobei die Steuervorrichtung (108) wenigstens ein eingebettetes System (124) aufweist, das ausgestaltet ist, die Schaltbewegung (49, 73) eines Kupplungsaktuators (42, 64) zu steuern,
wobei das wenigstens eine eingebettete System (124) Teil der Datenverarbeitungsvorrichtung (104) oder mit der Datenverarbeitungsvorrichtung (104) datenübertragend verbunden ist.

14. Fahrrad-Schaltgetriebe (4), insbesondere Tretlager- und/oder Nabenschaltung, für ein Fahrrad mit oder ohne Hilfsmotor (2), wobei das Fahrrad-Schaltgetriebe (4) aufweist:
- eine erste Kupplung (K₁, K₂, K₃), die zwischen einem eingekuppelten und einem ausgekuppelten Betätigungszustand umschaltbar ausgestaltet ist;
- mindestens eine zweite Kupplung (K₃, K₄, K₆), die zwischen einem eingekuppelten und einem ausgekuppelten Betätigungszustand umschaltbar ausgestaltet ist;
- einen ersten Kupplungsaktuator (42) zur Änderung des Betätigungszustandes der ersten Kupplung (K₁, K₂, K₃);
- mindestens einen zweiten Kupplungsaktuator (64) zur Änderung des Betätigungszustandes der zweiten Kupplung (K₃, K₄, K₆);
- ein erstes Zahnradpaar (28, 30) mit einem ersten Zahnrad (30), wobei die Festlegung des ersten Zahnrades (30) gegenüber einem Element des Fahrrad-Schaltgetriebes (4) abhängig vom Betätigungszustand der ersten Kupplung (K₁, K₂, K₃) ist;
- ein zweites Zahnradpaar (54, 56) mit einem zweiten Zahnrad (54), wobei die Festlegung des zweiten Zahnrades (54) gegenüber einem Element des Fahrrad-Schaltgetriebes (4) abhängig vom Betätigungszustand der zweiten Kupplung (K₃, K₄, K₆) ist;
- einen Gang und einen weiteren Gang aufweist, wobei in dem einen Gang die erste Kupplung (K₁, K₂, K₃) und die zweite Kupplung (K₃, K₄, K₆) jeweils einen anderen Betätigungszustand aufweisen als in dem anderen Gang; und
- eine Datenverarbeitungsvorrichtung (104) nach einem der Ansprüche 1 bis 9 oder eine Steuereinrichtung (108) nach Anspruch 10 bis 12 aufweist.

15. Fahrrad-Schaltgetriebe (4) nach Anspruch 14,
wobei das Fahrrad-Schaltgetriebe (4) ein erstes Teilgetriebe (32) und ein zweites Teilgetriebe (52) aufweist und sich die erste Kupplung (K₁, K₂, K₃) im ersten Teilgetriebe (32) und die zweite Kupplung (K₃, K₄, K₆) im zweiten Teilgetriebe (52) befindet.

16. Fahrrad-Schaltgetriebe (4) nach Anspruch 14 oder 15,
wobei die erste Kupplung (K₁, K₂, K₃) und die zweite Kupplung als ein schaltbarer Freilauf ausgestaltet sind.

17. Fahrrad (1) mit oder ohne Hilfsmotor (2), mit einem Fahrrad-Schaltgetriebe (4) nach einem der Ansprüche 14 bis 16.

18. Computer-implementiertes Verfahren zur Steuerung eines Gangwechsels in einem Fahrrad-Schaltgetriebe (4) für ein Fahrrad (1) mit oder ohne Hilfsmotor (2), insbesondere einer Tretlager- und/oder Nabenschaltung, von einem Gang (100) direkt in einen anderen Gang (102) durch automatisches Betätigen eines ersten und mindestens eines zweiten Kupplungsaktuators (42, 62),
umfassend die folgenden Schritte:
- Empfangen wenigstens eines Schaltparameters (112), der repräsentativ ist für einen momentanen Zustand des Fahrrad-Schaltgetriebes (4);
- Ausgeben eines Betätigungssignals (120) zur Betätigung des ersten Kupplungsaktuators (42) und mindestens des zweiten Kupplungsaktuators (64) abhängig von dem wenigstens einen Schaltparameter (112) und einem einen Befehl für einen Gangwechsel repräsentierenden Gangwechselsignal (106);
- wobei im Betätigungssignal (120) Steuerdaten (250, 252, 254, 256) enthalten sind, die repräsentativ sind für
= für in der Zukunft liegenden Zeitpunkte, an denen der erste Kupplungsaktuator (42) und/oder der zweite Kupplungsaktuator (64) eine für den Gangwechsel erforderliche Schaltbewegung (49, 73) ausgeführt haben oder ausführen soll, und/oder
= für einen zeitlichen Abstand zwischen der Betätigung des ersten Kupplungsaktuators (42) und der Betätigung des zweiten Kupplungsaktuators (64) und/oder
= für eine Schaltgeschwindigkeit des ersten Kupplungsaktuators (42) und eine Schaltgeschwindigkeit des zweiten Kupplungsaktuators (64).

19. Computerprogrammprodukt oder computerlesbarer Datenträger, umfassend Befehle, die bei der Ausführung durch einen Computer diesen veranlassen, das computer-implementierte Verfahren nach Anspruch 18 auszuführen.

20. Verfahren zum Durchführen eines Gangwechsels in einem Fahrrad-Schaltgetriebe (4) für ein Fahrrad (1) mit oder ohne Hilfsmotor (2), insbesondere einer Tretlager- und/oder Nabenschaltung, von einem Gang direkt in einen anderen Gang durch automatisches Betätigen eines ersten Kupplungsaktuators (42) und eines zweiten Kupplungsaktuators (64),
wobei bei einem Gangwechsel abhängig vom momentanen Zustand des Fahrrad-Schaltgetriebes (4) automatisch der erste Kupplungsaktuator (42) und der zweite Kupplungsaktuator (64) zu unterschiedlichen Zeitpunkten und/oder mit unterschiedlichen Schaltgeschwindigkeiten betätigt werden.
